# EUROPEAN PATENT APPLICATION

(11) **EP 4 832 475 A1**
(43) Date of publication of application: **28.10.2026**
(21) Application number: 25305593.3
(22) Date of filing: 25.04.2025
(51) Int. Cl.: H04N 1/60, H04N 9/64

(54) **SMART COLOR GAMUT CLIPPING ON QUANTIZED GAMUT BORDER COLORS AND COMPATIBLE WITH SUB-BLACK LEVELS**

(71) Applicant: InterDigital CE Patent Holdings, SAS, 75017 Paris (FR)
(72) Inventor: TOUZE, David, 35200 RENNES (FR); MORVAN, Patrick, 35890 LAILLE (FR); MAZZANTE, Angelo, 35520 MELESSE (FR)
(74) Representative: Interdigital

(57) **Abstract**

A method comprising:
obtaining a first YUV picture in a first color gamut;
applying a conversion process to the first YUV picture to obtain a second YUV picture in a second color gamut, the first color gamut encompassing the second color gamut, the conversion process comprising for a first YUV pixel of the first YUV picture:
obtaining a first RGB pixel in the second color gamut obtained from the first YUV pixel;
obtaining (7131) a pre-conditioned first RGB pixel from the first RGB pixel by applying a pre-conditioning step, the pre-conditioning step comprising clipping to zero each component of the first RGB pixel lower than zero responsive to at least one component of the first RGB pixel being greater than zero; and,
applying (7132) a gamut clipping process to the pre-conditioned first RGB pixel, the gamut clipping process consisting in clipping at least one component of the pre-conditioned first RGB pixel to a value defined by a clipping curve responsive to the at least one component fulfils a clipping criterion based on the clipping curve.

## Description

### 1. TECHNICAL FIELD

At least one of the present embodiments generally relates to the field of production of video and more particularly to a method, a device and a system for reducing issues introduced by a clipping in a conversion of a video content from a first color gamut to a second color gamut.

### 2. BACKGROUND

In order to ensure interoperability between video devices, many video systems comprise at least one conversion stage allowing for instance converting a YUV signal with a given Transfer function and given color gamut to a YUV signal with another transfer function and another color gamut

This is particularly true in a single stream HDR (High Dynamic Range)/SDR(Standard dynamic Range) system wherein a single stream allow distributing a SDR and a HDR version of the same content. For example, the standard SL-HDR1 (High-Performance Single Layer High Dynamic Range (HDR) System for use in Consumer Electronics devices; Part 1: Directly Standard Dynamic Range (SDR)Compatible HDR System (SL-HDR1); ETSI TS 103 433-1 V1.4.1 (2021-08*))* allows transmitting a HDR version of a content in the form of a SDR version of the content with metadata allowing the conversion from SDR to HDR. Typically, the SDR version is using YUV "8" bits or "10" bits with a BT.709 transfer function and a BT.709 color gamut, as described in BT.709 recommendation *(Recommendation ITU-R BT 709-6, Parameter values for the HDTV standards for production and international programme exchange, 06*/*2015*)*.* The HDR on its side is generally using a YUV "10" bits or "12" bits with a PQ or HLG transfer function and a BT.2020 color gamut as described in BT.2100 recommendation (*Recommendation ITU-R BT.2100-2, Image parameter values for high dynamic range television for use in production and international programme exchange, 07*/*2018*)*.*

A conversion from HDR YUV data to SDR YUV data is typically called a tone mapping (TM) while the inverse conversion is typically called inverse tone mapping (ITM). A typical TM comprises a color gamut conversion of RGB values from a first color gamut to a second color gamut. Such conversion may require a clipping of the values outputted by the color gamut conversion to make sure that the output of the color gamut conversion fits well within the second color gamut. It has been observed that a basic clipping may create some issues when the basically clipped RGB values in the second color gamut are then converted in YUV values for the SDR YUV data.

It is desirable to overcome the above drawbacks.

It is particularly desirable to propose an improved gamut clipping method limiting the issues created by the basic gamut clipping method.

### 3. BRIEF SUMMARY

In a first aspect, one or more of the present embodiments provide a method comprising:
obtaining a first YUV picture in a first color gamut;
applying a conversion process to the first YUV picture to obtain a second YUV picture in a second color gamut, the first color gamut encompassing the second color gamut, the conversion process comprising for a first YUV pixel of the first YUV picture:
   obtaining a first RGB pixel in the second color gamut obtained from the first YUV pixel;
   obtaining a pre-conditioned first RGB pixel from the first RGB pixel by applying a pre-conditioning step, the pre-conditioning step comprising clipping to zero each component of the first RGB pixel lower than zero responsive to at least one component of the first RGB pixel being greater than zero; and,
   applying a gamut clipping process to the pre-conditioned first RGB pixel, the gamut clipping process consisting in clipping at least one component of the pre-conditioned first RGB pixel to a value defined by a clipping curve responsive to the at least one component fulfils a clipping criterion based on the clipping curve.

In an embodiment, the pre-conditioned first RGB pixel is equal to the first RGB pixel responsive to no component of the first RGB pixel is lower than zero.

In an embodiment, responsive to at least one component of the first RGB pixel is lower than zero and a maximum of the components of the first RGB pixel is comprised between zero and a minimum value for clipping, each component of the first RGB pixel lower than zero is multiplied by a weighting value greater than zero and lower than one depending on the maximum to obtain a corresponding component of the pre-conditioned first RGB pixel.

In an embodiment, the weighting value MULT_VALUE is computed as follows:$MULT _VALUE = 1 - MAX / minForClip$
wherein MAX is the maximum and minForClip is the minimum value for clipping.

In an embodiment, the weighting value MULT _VALUE is computed as follows:$MULT_VALUE = 1 - √ \left(MAX/minForClip\right)$ wherein MAX is the maximum and minForClip is the minimum value for clipping.

In an embodiment, the clipping curve is such that a constant value is added to each negative component of the pre-conditioned first RGB pixel that is lower than a negative clipping constant.

In an embodiment, the clipping curve is such that no modification is applied to each negative component of the pre-conditioned first RGB pixel that is lower than a first negative clipping constant and a function is applied to each negative component of the pre-conditioned first RGB pixel that is lower than a second clipping constant but greater than the first negative clipping constant.

In an embodiment, the clipping curve is determined using a clipping curve determination process based on at least one second YUV pixel in the first color gamut with a value neighboring the value of the first YUV pixel and that provide a value of the component not fulfilling the clipping criterion when the second YUV pixel is converted in a second RGB pixel in the second color gamut.

In a second aspect, one or more of the present embodiments provide a device comprising electronic circuitry configured for:
obtaining a first YUV picture in a first color gamut;
applying a conversion process to the first YUV picture to obtain a second YUV picture in a second color gamut, the first color gamut encompassing the second color gamut, the conversion process comprising for a first YUV pixel of the first YUV picture:
   obtaining a first RGB pixel in the second color gamut obtained from the first YUV pixel;
   obtaining a pre-conditioned first RGB pixel from the first RGB pixel by applying a pre-conditioning step, the pre-conditioning step comprising clipping to zero each component of the first RGB pixel lower than zero responsive to at least one component of the first RGB pixel being greater than zero; and,
   applying a gamut clipping process to the pre-conditioned first RGB pixel, the gamut clipping process consisting in clipping at least one component of the pre-conditioned first RGB pixel to a value defined by a clipping curve responsive to the at least one component fulfils a clipping criterion based on the clipping curve.

In an embodiment, the pre-conditioned first RGB pixel is equal to the first RGB pixel responsive to no component of the first RGB pixel is lower than zero.

In an embodiment, responsive to at least one component of the first RGB pixel is lower than zero and a maximum of the components of the first RGB pixel is comprised between zero and a minimum value for clipping, each component of the first RGB pixel lower than zero is multiplied by a weighting value greater than zero and lower than one depending on the maximum to obtain a corresponding component of the pre-conditioned first RGB pixel.

In an embodiment, the weighting value MULT _VALUE is computed as follows: $MULT _ VALUE = 1 - MAX / minForClip$ wherein MAX is the maximum and minForClip is the minimum value for clipping.

In an embodiment, the weighting value MULT_VALUE is computed as follows: $MULT _ VALUE = 1 - √ \left(MAX/minForClip\right)$ wherein MAX is the maximum and minForClip is the minimum value for clipping.

In an embodiment, the clipping curve is such that a value is added to each negative component of the pre-conditioned first RGB pixel that is lower than a negative clipping constant.

In an embodiment, the clipping curve is such that no modification is applied to each negative component of the pre-conditioned first RGB pixel that is lower than a first negative clipping constant and a function is applied to each negative component of the pre-conditioned first RGB pixel that is lower than a second negative clipping constant but greater than the first negative clipping constant.

### 4. BRIEF SUMMARY OF THE DRAWINGS

Fig. 1A illustrates schematically an example of context in which the various embodiments are implemented;
Fig. 1B illustrates a process for converting YUV data from a first color gamut with a first transfer function to a second color gamut with a second transfer function;
Fig. 1C illustrates a process for converting YUV data from a second color gamut with a second transfer function to a third color gamut with a third transfer function, the second color gamut encompassing the third color gamut;
Fig. 2A illustrates schematically an example of hardware architecture of a processing module able to implement various aspects and embodiments;
Fig. 2B illustrates a block diagram of an example of a first system in which various aspects and embodiments are implemented;
Fig. 2C illustrates a block diagram of an example of a second system in which various aspects and embodiments are implemented;
Fig. 3A illustrates a basic clipping curve;
Fig. 3B illustrates a comparison of BT.709 and BT.2020 color gamuts;
Figs. 4 and 5 illustrates effects of a basic clipping on a color ramp;
Fig. 6 illustrates a process for converting first YUV data in a first color gamut into second YUV data in a second color gamut, the first color gamut encompassing the second color gamut;
Fig. 7 illustrates the conversion process executed during the process of Fig. 6;
Fig. 8 illustrates a process for obtaining information allowing deriving clipping curves used in a gamut clipping process;
Fig. 9 illustrates a example of a model approximating a point cloud used to determine a clipping curve;
Fig. 10 illustrates schematically a first embodiment of a pre-conditioning step;
Fig. 11 illustrates schematically a second embodiment of the pre-conditioning step;
Fig. 12 illustrates schematically a first embodiment of a clipping curve allowing a negative passthrough clipping strategy;
Fig. 13 illustrates schematically the second embodiment of a clipping curve allowing a negative passthrough clipping strategy;
Fig. 14 summarizes a clipping method according to various embodiments; and,
Fig. 15 illustrates a comparison of an application of a basic clipping method and of the clipping method according to the various embodiments.

### 5. DETAILED DESCRIPTION

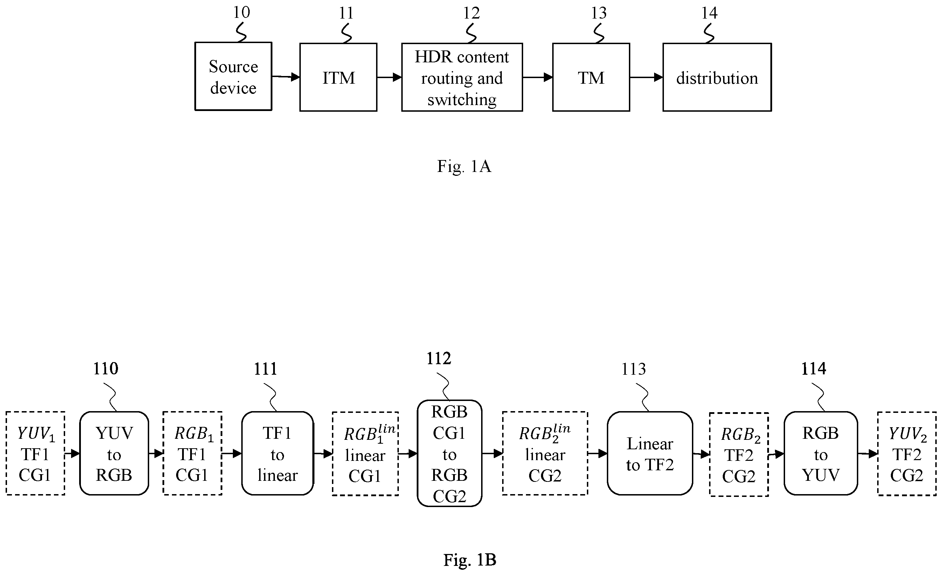

Fig. 1A illustrates an example of context in which the various embodiments are implemented.

In Fig. 1A, a source device 10 provides a video content to a ITM module 11. The source device 10 is for instance a SDR camera generating a SDR version of the video content. The SDR version corresponds to first YUV data *YUV*₁ with a first transfer function and a first color gamut. For example, the first YUV data *YUV*₁ are YUV "8" bits or "10" bits with a BT.709 transfer function (i.e., the first transfer function) and a BT.709 color gamut (i.e., the first color gamut).

The ITM module 11 converts the first YUV data *YUV*₁ into second YUV data *YUV*₂ with a second transfer function and a second color gamut. The second YUV data *YUV*₂ are for example "10" bits or "12" bits HDR data with a PQ or HLG transfer function and a BT.2020 color gamut.

The second YUV data *YUV*₂ are then provided to a routing and switching module 12. The routing and switching module 12 is in charge of routing the second YUV data *YUV*₂ (i.e., te HDR data) to a TM module 13.

The TM module 13 converts the second YUV data into third YUV data *YUV*₃ with a third transfer function and a third color gamut. For example, the third transfer function is identical to the first transfer function and the third color gamut is identical to the first color gamut. Due to roundings and quantizations performed by the ITM and the TM modules, the third YUV data *YUV*₃ are SDR data corresponding to an approximation of the first YUV data *YUV*₁.

The third YUV data *YUV*₃ are then provided to a distribution module 14 in charge of distributing these data for example on a network. The distribution module 14 generally comprises an encoding module in charge of encoding the third YUV data *YUV*₃ representing a SDR version of the video content in a bitstream using a video compression format such as AVC ((ISO/CEI 14496-10 / ITU-T H.264), HEVC (ISO/IEC 23008-2 - MPEG-H Part 2, High Efficiency Video Coding / ITU-T H.265)), VVC (ISO/IEC 23090-3 - MPEG-I, Versatile Video Coding/ ITU-T H.266), AV1,VP9, EVC (ISO/CEI 23094-1 Essential Video Coding) or any other video compression format adapted to encode SDR video contents. The output of the encoding system is a bitstream representing the encoded third YUV data *YUV*₃*.*

In a single stream HDR/SDR system based on SL-HDR1, an additional module, not represented in Fig. 1A, generates SL-HDR1 metadata allowing converting SDR data in HDR data. These metadata are then provided along with the bitstream to a receiving system (not represented in Fig. 1A) for instance via a network. The receiving system can then decide to either decode and display only the SDR version of the video content or to decode the SDR version of the video content and to generate a reconstructed HDR version of the video content applying an ITM based on the SL-HDR1 metadata. The reconstructed HDR version of the video content is then displayed by the receiving system.

As explained in the document EBU R 103 (Recommendation EBU R 103, Video Signal Tolerance in Digital Television Systems, Version 3.0, 05/2020), the HDR and SDR content can be encoded with four different representations:
- Legal Range (or Narrow Range or Nominal Video Range). For "10" bits contents:
   o Y is encoded in the range [64..940]; ranges [4..63] and [941..1019] are not used.
   ∘ U and V are encoded in the range [64..960]; ranges [4..63] and [961..1019] are not used.
- Full Range (SDI-based): used in traditional transmission systems. In the following, Full Range by default refers to this Full Range (SDI-based) definition. For "10" bits contents:
   ∘ Y is encoded in the range [4..1019].
   ∘ U and V are encoded in the range [4..1019].
- Full Range (file-based): used only for file-based exchange. For "10" bits contents:
   ∘ Y, R, G and B are encoded in the range [0..1023].
   ∘ U and V are encoded in the range [0..1023].
- Extended Range: This format uses the Legal Range (or Narrow Range or Nominal Video Range) signals for the useful video signal and uses two extended ranges (Sub-Blacks and Super-Whites) for extra usage. For "10" bits contents:
   ∘ Useful video signal:
      ▪ Y is encoded in the range [64..940].
      ▪ U and V are encoded in the range [64..960].
   ∘ Sub-Blacks: Y is encoded in the range [4..63] and can be typically used for monitor calibration.
   ∘ Super-Whites: Y is encoded in the range [941..1019] range and can be typically used for extra dynamic range signaling.

In this document we introduce a new representation called *Extended Full Range* (EFR) that uses the Full Range (file-based) signals for the useful video signal and uses two extended ranges (Sub-Blacks and Super-Whites) for extra usage. This representation is only defined for Y and RGB components. For "10" bits input contents, floating-point values are defined:
- Useful video signal: Y, R, G and B are encoded in the range [0..1023] (or [0..1] when using normalized values, i.e. divided by 1023).
- Sub-Blacks: Y, R, G and B are encoded in the range [-70,068..0[ (or [-0,685..0[ when using normalized values, i.e. divided by 1023) and can be typically used for monitor calibration. The minimum value "-70,068" is computed from the Sub-Black minimum value "4" using traditional Legal Range to Full Range conversion: (4 - 64) / 876 * 1023 = -70,068.
- Super-Whites: Y, R, G and B are encoded in the range ]1023..1115,256] (or ]1..1,09] when using normalized values, i.e. divided by 1023) and can be typically used for extra dynamic range signaling. The maximum value "1115,256" is computed from the Super-White maximum value "1019" using traditional Legal Range to Full Range conversion: (1019 - 64) / 876 * 1023 = 1115,256.

**Fig. 1B** illustrates schematically a process executed by a color gamut conversion module comprised in the ITM module 11.

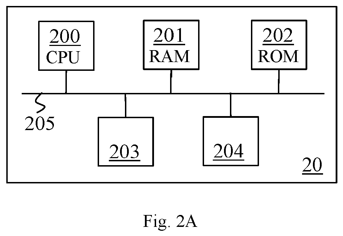

The process of Fig. 1B is for example implemented by a processing module 20 of the ITM module 11, the processing module 20 being described latter in relation to Fig. 2A.

In the example of Fig. 1B, the first YUV data *YUV*₁ were encoded or generated with a transfer function TF1 and a color gamut CG1. The second YUV data *YUV*₂ have a transfer function TF2 and a color gamut CG2.

In a step 110, the processing module 20 converts the YUV data *YUV*₁ (with a transfer function TF1 and a color gamut CG1) into RGB data *RGB*₁ (with a transfer function TF1 and a color gamut CG1) using a YUV to RGB matrix dedicated to the color gamut CG1.

In a step 111, the processing module 20 converts the RGB data *RGB*₁ (with a transfer function TF1 and a color gamut CG1) to RGB data ${RGB}_{1}^{lin}$ (in the linear domain with no transfer function and a color gamut CG1) using a non-linear converter dedicated to the TF1 to linear transform.

In a step 112, the processing module 20 converts the RGB data ${RGB}_{1}^{lin}$ (in the linear domain with no transfer function and a color gamut CG1) to RGB data ${RGB}_{2}^{lin}$ (in the linear domain with no transfer function and a color gamut CG2) using a RGB to RGB matrix dedicated to the CG1 to CG2 color gamut transform.

In a step 113, the processing module 20 converts the RGB video ${RGB}_{2}^{lin}$ (in the linear domain with no transfer function and a color gamut CG2) to RGB data *RGB*₂ (with a transfer function TF2 and a color gamut CG2) using a non-linear converter dedicated to the linear to TF2 transform.

In a step 114, the processing module 20 converts the RGB data *RGB*₂ (with a transfer function TF2 and a color gamut CG2) to YUV data *YUV*₂ (with a transfer function TF2 and a color gamut CG2) using a RGB to YUV matrix dedicated to the color gamut CG2.

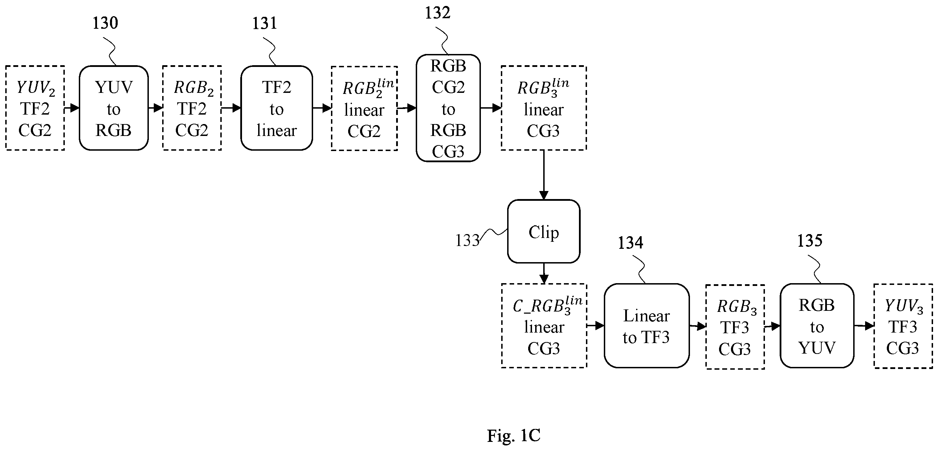

**Fig. 1C** illustrates schematically a process executed by a color gamut conversion module comprised in the TM module 13.

The process of Fig. 1C is for example implemented by a processing module 20 of the TM module 13.

In the example of Fig. 1C, the processing module 20 of the TM module 13 obtains the second YUV data *YUV*₂ from the ITM module 11 via the HDR content routing and switching module 12.

In a step 130, the processing module 20 converts the YUV data *YUV*₂ (with the transfer function TF2 and the color gamut CG2) into RGB data *RGB*₂ (with the transfer function TF2 and a color gamut CG2) using a YUV to RGB matrix dedicated to the color gamut CG2.

In a step 131, the processing module 20 converts the RGB data *RGB*₂ (with a transfer function TF2 and the color gamut CG2) to RGB data ${RGB}_{2}^{lin}$ (in the linear domain with no transfer function and the color gamut CG2) using a non-linear converter dedicated to the TF2 to linear transform.

In a step 132, the processing module 20 converts the RGB data ${RGB}_{2}^{lin}$ (in the linear domain with no transfer function and the color gamut CG2) to RGB data ${RGB}_{3}^{lin}$ (in the linear domain with no transfer function and a color gamut CG3) using a RGB to RGB matrix dedicated to the CG2 to CG3 color gamut transform.

In a step 133, the processing module 20 applies a gamut clipping to the RGB data ${RGB}_{3}^{lin}$ (in the linear domain with no transfer function and the color gamut CG3), to produce RGB data $C _ {RGB}_{3}^{lin}$ (in the linear domain with no transfer function and the color gamut CG3).

In a step 134, the processing module 20 converts the RGB video $C _ {RGB}_{3}^{lin}$ (in the linear domain with no transfer function and a color gamut CG3) to RGB data *RGB*₃ (with the transfer function TF3 and a color gamut CG3) using a non-linear converter dedicated to the linear to TF3 transform.

In a step 135, the processing module 20 converts the RGB data *RGB*₃ (with the transfer function TF3 and a color gamut CG3) to YUV data *YUV*₃ (with the transfer function TF3 and the color gamut CG3) using a RGB to YUV matrix dedicated to the color gamut CG3.

Generally, the conversions of steps 110, 111, 112, 113, 114 and 130, 131, 132, 134, 135 are done in floating-point format for a better accuracy. At the end of the processes of Figs. 1B and 1C, a quantization is applied to the YUV data *YUV*₂ and *YUV*₃ (in floating point values) into YUV "8", "10" or "12" bits fix-point values.

In an example, the transfer function TF1 and TF3 are BT.1886 (as described in document Recommendation ITU-R BT.1886-0, Reference electro-optical transfer function for flat panel displays used in HDTV studio production, 03/2011) or BT.709, the color gamuts CG1 and CG3 are BT.709, the transfer function TF2 is PQ or HLG and the color gamut CG2 is BT.2020. One can note that the PQ, HLG and BT.1886 definitions are only valid for positive signals, i.e. E = EOTF(Ein), with Ein >= 0. When any of the R, G or B component is negative, the following equation applies: E = - EOTF(-Ein).

In step 132, as the color gamut CG2 (typically BT.2020) is broader than the color gamut CG3 (typically BT.709), a gamut clipping method is applied (in step 133) to make sure that the RGB data resulting from the conversion from the color gamut CG2 to the color gamut CG3 fits well within the color gamut CG3 boundaries.

One can note that, for questions of consistency of colors, the ITM module 11 may produce a HDR content in the color gamut CG2 (for example BT.2020) but with colors limited to the color gamut CG1 (for example BT.709). Therefore, the gamut clipping is appropriate in the TM module 13.

Supposing that the RGB data ${RGB}_{3}^{lin}$ are normalized values, a basic gamut clipping method may be the following: $C _ {R}_{3}^{lin} = Max \left(0, Min\left(1, {R}_{3}^{lin}\right)\right)$ $C _ {G}_{3}^{lin} = Max \left(0, Min\left(1, {G}_{3}^{lin}\right)\right.$ $C _ {B}_{3}^{lin} = Max \left(0, Min\left(1, {B}_{3}^{lin}\right)\right)$ Where ${R}_{3}^{lin}$ (respectively ${G}_{3}^{lin} , {B}_{3}^{lin}$) represents the component R (respectively G, B) of the RGB data ${RGB}_{3}^{lin} , C _ {R}_{3}^{lin}$ (respectively $C _ {G}_{3}^{lin} , C _ {B}_{3}^{lin}$) represents the component R (respectively G, B) of the RGB data $C _ {RGB}_{3}^{lin}$, *Max(x,y)* takes the maximum of *x* and *y* and *Min(x,y)* takes the minimum of *x* and*y*.

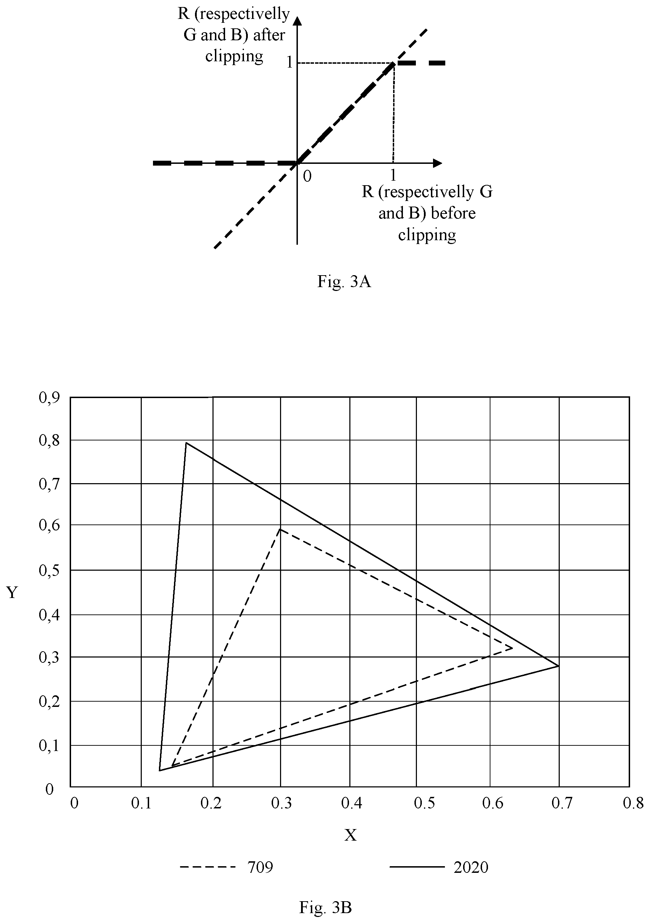

**Fig. 3A** illustrates the clipping curve used in the basic gamut clipping method. As can be seen, all negative components of the RGB data ${RGB}_{3}^{lin}$ are clipped to zero in the RGB data $C _ {RGB}_{3}^{lin}$.

However, when applying such a basic gamut clipping method, some issues may appear in the YUV data *YUV₃,* especially on pixels of the YUV data *YUV*₃ corresponding to pixels of the YUV data *YUV*₂ that are on the color gamut CG3 boundaries. Typically, contiguous pixels of the YUV data *YUV*₂ representing a smooth transition between two colors may appear as a staircase transition (also called banding effect) in the YUV data *YUV*₃*.*

**Fig. 3B** illustrates a two-dimensional (2D) representation of the BT.709 color gamut and of the BT.2020 color gamut. A color gamut is generally represented by a volume in a three-dimensional (3D) space but to facilitate the understanding, color gamuts are represented in a 2D space in Fig. 3B. As can be seen the BT.2020 color gamut is wider than (i.e. encompasses) the BT.709 color gamut.

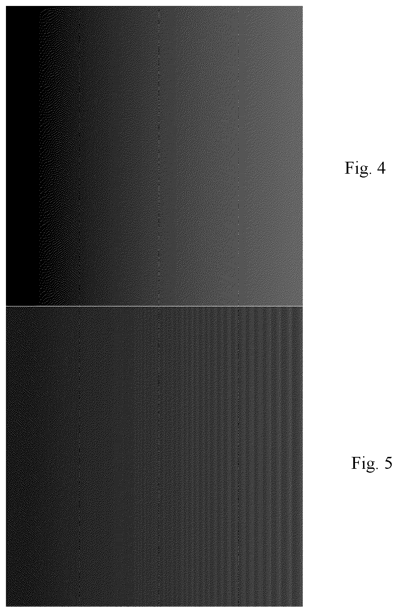

**Fig. 4** provide an example of a greyscale representation of a YUV data *YUV*₂ (with TF2 = PQ and CG2 = BT.2020) representing a color ramp made of two parts: A first part (or initial part) dedicated to sub-black levels that is made with an increasing Y value from "4" to "63", along with UV chromatic values set to "512". A second part with a Full Range (file-based) BT.709 color ramp with increasing luminance (from (R = 0 ; G = 0 ; B = 0) to (R = 1023 ; G = 0 ; B = 0) in the BT.709 color gamut) is converted into PQ BT.2020 YUV signal having a Legal Range.

Fig. 5 provide an example of a greyscale representation of YUV data *YUV*₃ resulting from the application of the process of Fig. 1C on the YUV data *YUV*₂ of Fig. 4 with a basic clipping process in step 133. As can be seen, a banding effect appears in Fig. 5. In addition, it had been observed that sub-blacks are removed. These artefacts are unacceptable and need to be corrected.

While Fig. 4 and 5 illustrate issues occurring in the spatial domain, similar issues may also appear in the temporal domain.

In the former example, TF2 is PQ. It should be noted that the same behavior can be observed when TF2 is HLG transfer function (see document Recommendation ITU-R BT.2100-2, Image parameter values for high dynamic range television for use in production and international programme exchange, 07/2018*)* or BT.709 transfer function (see document Recommendation ITU-R BT. 709-6, Parameter values for the HDTV standards for production and international programme exchange, 06/2015) or BT.1886 transfer function (see document Recommendation ITU-R BT.1886-0, Reference electro-optical transfer function for flat panel displays used in HDTV studio production, 03/2011)*.*

The proposed solution is related to gamut clipping (step 133) in the context of a High Dynamic Range video (and even Standard Dynamic Range) that uses sub-black levels. Considering a device receiving a HDR video (or a SDR video), generally in "10" bits video format and in BT.2020 color gamut and using either PQ or HLG format (or BT.709/BT.1886 format), if this device needs to convert the BT.2020 color gamut video into a BT.709 color gamut video, using a basic gamut clipping method risks to produce an unstable video with some artefacts such as banding, specifically on pixels that are located on the BT.709 color gamut boundaries in the input BT.2020 color gamut video. Moreover, the basic gamut clipping method does not allow sub-black levels passthrough. To deal with these issues, a new gamut clipping method is proposed that prevents these banding artefacts and provide stable video while still allowing sub-black levels passthrough (i.e., preservation).

**Fig. 2A** illustrates schematically an example of hardware architecture of a processing module 20 comprised at least in the ITM module 11, in the TM module 13 or in a receiving system.

The processing module 20 comprises, connected by a communication bus 205: a processor or CPU (central processing unit) 200 encompassing one or more microprocessors, general purpose computers, special purpose computers, and processors based on a multi-core architecture, as non-limiting examples; a random access memory (RAM) 201; a read only memory (ROM) 202; a storage unit 203, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 204 for exchanging data with other modules, devices, systems or equipment. The communication interface 204 can include, but is not limited to, a transceiver configured to transmit and to receive data over a communication network 21 (not represented in Fig. 2A). The communication interface 204 can include, but is not limited to, a modem or a network card.

For example, in the ITM module 11, the communication interface 204 enables the processing module 20 to receive YUV data *YUV*₁ and to output YUV data *YUV*₂. In the TM module 13, the communication interface 204 enables the processing module 20 to receive YUV data *YUV*₂ and to output YUV data *YUV*₃*.*

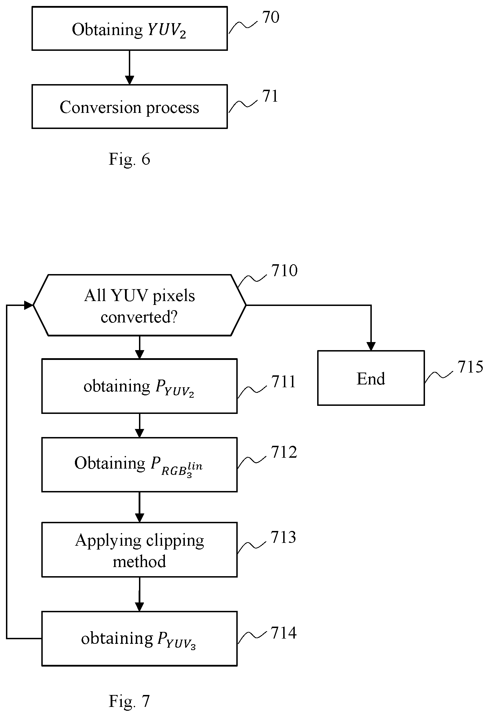

The processor 200 is capable of executing instructions loaded into the RAM 201 from the ROM 202, from an external memory (not shown), from a storage medium, or from a communication network. When the processing module 20 is powered up, the processor 200 is capable of reading instructions from the RAM 201 and executing them. These instructions form a computer program causing, for example, the implementation by the processor 200 of a process comprising the processes described in relation to Figs. 6, 7, 8, 10, 11 and 14.

All or some of the algorithms and steps of these processes may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit). The processor 200, a DSP, a microcontroller, a FPGA and an ASIC are therefore examples of electronic circuitry adapted to implement (or configured for implementing) the processes described in relation to Figs. 6, 7, 8, 10, 11 and 14.

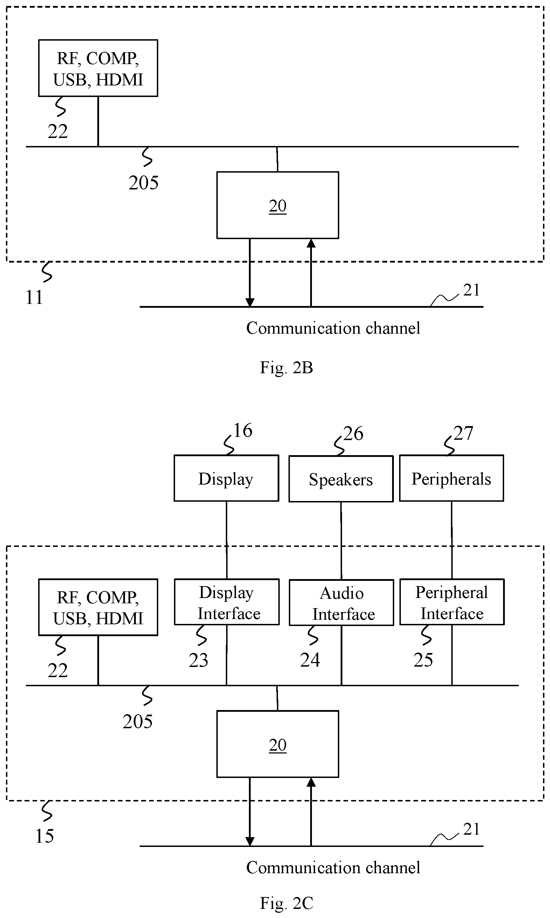

**Fig. 2C** illustrates a block diagram of an example of a receiving system in which various aspects and embodiments are implemented.

The receiving system can be embodied as a device including various components or modules and is configured to receive, for example, A bitstream comprising the SDR version of a video content along with SL-HDR1 metadata and to generate either a reconstructed SDR version of the video content or a reconstructed HDR version of the video content. Examples of such system include, but are not limited to, various electronic systems such as a personal computer, a laptop computer, a smartphone, a tablet, a television or a set top box. Components of the receiving system, singly or in combination, can be embodied in a single integrated circuit (IC), multiple ICs, and/or discrete components. For example, in at least one embodiment, the receiving system comprises one processing module 20 that implements all processes executed by the receiving system. In various embodiments, the receiving system is communicatively coupled to one or more other systems, or other electronic devices, via, for example, a communications bus or through dedicated input and/or output ports.

The input to the processing module 20 can be provided through various input modules as indicated in block 22. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in Fig. 2C, include composite video.

In various embodiments, the input modules of block 22 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting the receiving system to other electronic devices across USB and/or HDMI connections. It is to be understood that various aspects of input processing, for example, Reed-Solomon error correction, can be implemented, for example, within a separate input processing IC or within the processing module 20 as necessary. Similarly, aspects of USB or HDMI interface processing can be implemented within separate interface ICs or within the processing module 20 as necessary. The demodulated, error corrected, and demultiplexed stream is provided to the processing module 20.

Various elements of the receiving system can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the receiving system, the processing module 20 is interconnected to other elements of the receiving system by the bus 205.

The communication interface 204 of the processing module 20 allows the receiving system to communicate on the communication network 21. The communication network 21 can be implemented, for example, within a wired and/or a wireless medium.

Data is streamed, or otherwise provided, to the receiving system, in various embodiments, using a wireless network such as a Wi-Fi network, for example IEEE 802.11 (IEEE refers to the Institute of Electrical and Electronics Engineers). The Wi-Fi signal of these embodiments is received over the communications network 21 and the communications interface 204 which are adapted for Wi-Fi communications. The communications network 21 of these embodiments is typically connected to an access point or router that provides access to external networks including the Internet for allowing streaming applications and other over-the-top communications. Still other embodiments provide streamed data to the receiving system using the RF connection of the input block 22. As indicated above, various embodiments provide data in a non-streaming manner, for example, when the receiving module is a smartphone or a tablet. Additionally, various embodiments use wireless networks other than Wi-Fi, for example a cellular network or a Bluetooth network.

The receiving system can provide an output signal to various output devices using the communication network 21 or the bus 205. For example, the receiving system can provide a video content to a display device 16.

The receiving system can provide an output signal to various output devices, including the display device 16, speakers 26, and other peripheral devices 27. The display device 16 includes one or more of, for example, a touchscreen display, an organic light-emitting diode (OLED) display, a curved display, and/or a foldable display. The display device 16 can be for a television, a tablet, a laptop, a smartphone (mobile phone), or other devices. The display device 16 can also be integrated with other components (for example, as in a smartphone or a tablet), or separate (for example, an external monitor for a laptop). The display device 16 is compatible with video contents generated by the receiving device. The other peripheral devices 27 include, in various examples of embodiments, one or more of a stand-alone digital video disc (or digital versatile disc) (DVR, for both terms), a disk player, a stereo system, and/or a lighting system. Various embodiments use one or more peripheral devices 27 that provide a function based on the output of the receiving system. For example, a disk player performs the function of playing the output of the receiving module.

In various embodiments, control signals are communicated between the receiving system and the display device 16, speakers 26, or other peripheral devices 27 using signaling such as AV.Link, Consumer Electronics Control (CEC), or other communications protocols that enable device-to-device control with or without user intervention. The output devices can be communicatively coupled to the receiving module via dedicated connections through respective interfaces. Alternatively, the output devices can be connected to the receiving module using the communication network 21 via the communication interface 204. The display device 16 and speakers 26 can be integrated in a single unit with the other components of the receiving module in an electronic device such as, for example, a television. In various embodiments, the display interface includes a display driver, such as, for example, a timing controller (T Con) chip.

The display device 16 and speakers 26 can alternatively be separate from one or more of the other components, for example, if the RF module of input 22 is part of a separate set-top box. In various embodiments in which the display device 16 and speakers 26 are external components, the output signal can be provided via dedicated output connections, including, for example, HDMI ports, USB ports, or COMP outputs.

**Fig. 2B** illustrates a block diagram of an example of the ITM module 11 or the TM module 13 adapted to convert YUV video data with a first transfer function and in a first color gamut into YUV video data with a second transfer function and in a second color gamut in which various aspects and embodiments are implemented.

ITM module 11 (respectively TM module 13) can be embodied as a device including the various components and modules described above and is configured to perform one or more of the aspects and embodiments described in this document.

In an embodiment, the ITM module 11 and the TM module 13 are included in a same system.

Examples of such devices include, but are not limited to, various electronic devices such as personal computers, laptop computers, a camera, a smartphone and a server. Elements or modules of the ITM module 11 (respectively the TM module 13), singly or in combination, can be embodied in a single integrated circuit (IC), multiple ICs, and/or discrete components. For example, in at least one embodiment, the ITM module 11 (respectively the TM module 13) comprises one processing module 20 that implement a conversion of YUV video data with a first transfer function and in a first color gamut to YUV video data with a second transfer function and in a second color gamut. In various embodiments, the ITM module 11 (respectively the TM module 13) is communicatively coupled to one or more other systems, or other electronic devices, via, for example, a communications bus or through dedicated input and/or output ports.

The input to the processing module 20 can be provided through various input modules as indicated in block 22 already described in relation to Fig. 2C.

Various elements of the ITM module 11 (respectively the TM module 13) can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the ITM module 11 (respectively the TM module 13), the processing module 20 is interconnected to other elements of the ITM module 11 (respectively the TM module 13) by the bus 205.

The communication interface 204 of the processing module 20 allows the ITM module 11 (respectively the TM module 13) to communicate on the communication network 21. The communication network 21 can be implemented, for example, within a wired and/or a wireless medium.

Data is streamed, or otherwise provided, to the color gamut conversion module, in various embodiments, using a wireless network such as a Wi-Fi network, for example IEEE 802.11 (IEEE refers to the Institute of Electrical and Electronics Engineers). The Wi-Fi signal of these embodiments is received over the communications network 21 and the communications interface 204 which are adapted for Wi-Fi communications. The communications network 21 of these embodiments is typically connected to an access point or router that provides access to external networks including the Internet for allowing streaming applications and other over-the-top communications. Still other embodiments provide streamed data to the ITM module 11 (respectively the TM module 13) using the RF connection of the input block 22. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, smartphones (cell phones), portable/personal digital assistants ("PDAs"), tablets, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations or embodiments can produce a variety of signals formatted to carry information that can be, for example, stored or transmitted. The information can include, for example, instructions for performing a method, or data produced by one of the described implementations or embodiments. For example, a signal can be formatted to carry a video content in the first or the second format of a described embodiment. Such a signal can be formatted, for example, as an electromagnetic wave (for example, using a radio frequency portion of spectrum) or as a baseband signal. The formatting can include, for example, encoding a video content in the first or the second format in an encoded stream (or bitstream) and modulating a carrier with the encoded stream. The information that the signal carries can be, for example, analog or digital information. The signal can be transmitted over a variety of different wired or wireless links, as is known. The signal can be stored on a processor-readable medium.

Various embodiments may refer to a bitstream. Bitstreams include, for example, any series or sequence of bits, and do not require that the bits be, for example, transmitted, received, or stored.

**Fig. 6** illustrates a process for converting first YUV data in a first color gamut into second YUV data in a second color gamut, the first color gamut encompassing the second color gamut.

The process of Fig. 6 is for example executed by the processing module 20 of the TM module 13.

The first YUV data are for example the YUV data *YUV*₂ and the second YUV data are for example the YUV data *YUV*₃ described in relation to Fig. 1C.

In a step 70, the processing module 20 obtains the YUV data *YUV*₂.

In a step 71, the processing module 20 applies a conversion process to the YUV data *YUV*₂ to obtain the YUV data *YUV*₃*.*

**Fig. 7** illustrates the conversion process executed in step 71.

In a step 710, the processing module 20 determines if all pixels of the YUV data *YUV*₂ have been processed. If no, step 710 is followed by a step 711.

In step 711, the processing module 20 obtains a pixel *P_{YUV2}* of the YUV data *YUV*₂.

In a step 712, the processing module 20 applies steps 130, 131 and 132 to obtain a pixel ${P}_{{RGB}_{3}^{lin}}$ of the RGB data ${RGB}_{3}^{lin}$ from the pixel *P*_{*YUV*₂}*.*

In a step 713, the processing module 20 applies a gamut clipping method (corresponding to step 133 in Fig. 1C) according to various embodiments described below to obtain a pixel $C _ {P}_{{RGB}_{3}^{lin}}$ of the RGB data $C _ {RGB}_{3}^{lin}$ from the pixel ${P}_{{RGB}_{3}^{lin}}$.

In a step 714, the processing module 20 applies steps 134 and 135 to obtain a pixel *P*_{*YUV*₃} of the YUV data *YUV*₃*.*

Step 714 is followed by step 710 to continue with the next pixel of the YUV data *YUV*₂. If no pixel remains in the YUV data *YUV*₂ the processing module stops the conversion process.

The gamut clipping method of step 713 has two clipping characteristics:
First clipping characteristic: It does not clip negative values to "0", but instead it modifies a small negative value to a positive value. This positive value should be close to the one produced by an input pixel that have a minor difference with the input pixel that produces this negative value. Doing so, we ensure that when a minor difference appears between two input pixels, the gamut clipping method produces output pixels that are close together and therefore an output video without the artefacts and issues described formerly in the document;
Second clipping characteristic: It allows sub-black levels passthrough, i.e. it preserves sub-black signals by not clipping, but by slightly modifying or by not modifying any component that belong to a sub-black signal.

In an embodiment, the gamut clipping of step 713 comprises determining if the component R (respectively G or B) of the pixel ${P}_{{RGB}_{3}^{lin}}$ fulfils a clipping criterion based on a clipping curve. Responsive to the component R (respectively G or B) of the pixel ${P}_{{RGB}_{3}^{lin}}$ fulfils the clipping criterion, the processing module 20 clips the component R (respectively G or B) to a value provided by the clipping curve. The value provided by the clipping curve allows respecting the first clipping characteristic. The clipping curve is determined based on at least one YUV pixel *p_{YUV}* with the transfer function TF2 and the color gamut CG2 with a value neighboring the value of the pixel *P*_{*YUV*₂} that provide a value of the component R (respectively G or B) not fulfilling the clipping criterion (i.e., not requiring a clipping) when converted in a RGB pixel *p_{RGB}* in the linear domain with no transfer function and a color gamut CG3.

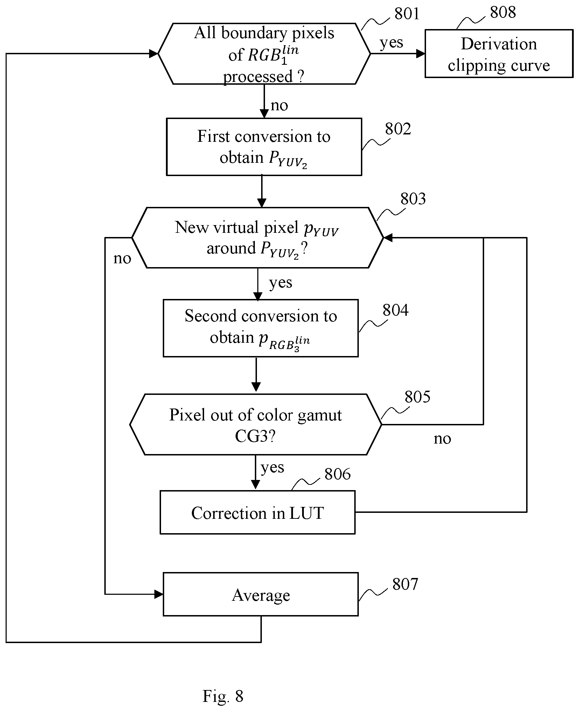

In an embodiment, each clipping curve allowing respecting the first clipping characteristic is derived from information obtained by applying a simulation process detailed below in relation to Fig. 8.

**Fig. 8** illustrates a process for obtaining information allowing deriving clipping curves used in a gamut clipping process.

The process of Fig. 8 is executed offline, by a processing module 20.

During the process of Fig. 8, the processing module 20 browses all pixels of simulation RGB data ${RGB}_{1}^{lin}$ located at the boundary of the color gamut CG1.

To do so, in a step 801, pixels located at the boundary of the color gamut CG1 of the simulation RGB data ${RGB}_{1}^{lin}$ are browsed using six independent pixel loops (we suppose here that the simulation RGB data ${RGB}_{1}^{lin}$ are "10" bits data extended range values varying from "4" to "1019"):
In a first loop, the component R of the simulation RGB data ${RGB}_{1}^{lin}$ is browsed from "4" to "1019", the components G and B being fixed to "64".

In a second loop, the component G of the simulation RGB data ${RGB}_{1}^{lin}$ is browsed from "4" to "1019", the components R and B being fixed to "64".

In a third loop, the component B of the simulation RGB data ${RGB}_{1}^{lin}$ is browsed from "4" to "1019", the components R and G being fixed to "64".

In a fourth loop, the components R and B of the simulation RGB data ${RGB}_{1}^{lin}$ are browsed jointly (R=B) from "4" to "1019", the components G being fixed to "64".

In a fifth loop, the components B and G of the simulation RGB data ${RGB}_{1}^{lin}$ are browsed jointly (B=G) from "4" to "1019", the components R being fixed to "64".

In a sixth loop, the components R and G of the simulation RGB data ${RGB}_{1}^{lin}$ are browsed jointly (R=G) from "4" to "1019", the components B being fixed to "64".

These six loops are representing the three primary colors (Red for the first loop, Green for the second loop, Blue for the third loop) and the three secondary colors (Magenta for the fourth loop, Cyan for the fifth loop and Yellow for the sixth loop). Other simulation strategies with more colors could be envisioned to improve the precision of the model.

For each component R, G and B of pixels of the simulation RGB data ${RGB}_{1}^{lin}$ located at the boundary of the color gamut CG1 that is supposed to be close to zero (for instance, in the first loop incrementing R, G and B are supposed to be close to zero), a LUT (Look-Up Table) is created based on the value of the component R, G or B that is not supposed to be close to zero (for instance, in the first loop the component R of a pixel of the RGB data ${RGB}_{1}^{lin}$ is not supposed to be close to zero (i.e., is in the range [-0.0685..1.09])). The number of entries of the LUTs depends on a chosen quantization step of the component(s) of the pixels of the simulation RGB data ${RGB}_{1}^{lin}$ that is not supposed to be close to zero. For example, if a 1/100 quantization step is chosen, the component(s) of the pixels of the simulation RGB data ${RGB}_{1}^{lin}$ that is not supposed to be close to zero is quantized as follows:${X}_{q} = \left(int\right) \left(X*100+0.5\right)$ Where *X* is the component R, G or B of a pixel of the simulation RGB data ${RGB}_{1}^{lin}$ and (int)(*Z*) takes the integer part of *Z*. *X_{q}* is in the range [-6..109] and *X* is in the range [-0.0685..1.09]. In this example, the number of entries of the LUTs is "116".

As the minimum quantized value is negative ("-6" in the example above), then a shifting value *LUT*_*entry*_*shift=6* is added to the computed *X_{q}* so that the first entry of the LUT (entry "0") is selected with the lowest possible value of *X.*

Each LUT entry is initialized to "0".

Therefore, nine LUTs are created:
for the first loop (R varying from "4" to "1019", G = B = 64), two LUTs are created: *positive*_*G*_*clip*_*on*_*red*_*patch[0..nb*_*LUT*_*entry-1]* and *positive*_*B*_*clip*_*on*_*red patch[0..nb*_*LUT*_*entry-1];*
for the second loop (G varying from "4" to "1019", R = B = 64), two LUTs are created: *positive*_*R*_*clip*_*on _green_patch[0..nb*_*LUT*_*entry-1]* and *positive*_*B_clip*_*on*_*green_patch[0..nb*_*LUT*_*entry-1];*
for the third loop (B varying from "4" to "1019", R = G = 64), two LUTs are created: *positive_R_clip*_*on*_*blue*_*patch[0..nb*_*LUT*_*entry-1]* and *positive*_*G*_*clip*_*on_blue*_*patch[0..nb*_*LUT*_*entry-1];*
for the fourth loop (R = B varying from "4" to "1019", G = 64), one LUT is created: *positive*_*G*_*clip*_*on*_*magenta patch[0..nb*_*LUT*_*entry-1];*
for the fifth loop (G = B varying from "4" to "1019", R = 64), one LUT is created: *positive_R_clip*_*on_cyan*_*patch[0..nb*_*LUT*_*entry-1];*
for the sixth loop (R = G varying from "4" to "1019", B = 64), one LUT is created: *positive_B_clip*_*on*_*yellow_patch[0..nb*_*LUT*_*entry-1].*

Then the processing module creates a counter for each LUT entry (the counter is initialized to zero):
for the first loop (R varying from "4" to "1019", G = B = 64), two tables of counters are created: *positive*_*G*_*clip*_*on*_*red*_*patch_counter[0..nb*_*LUT*_*entry-1]* and *positive*_*B*_*clip_on_red*_*patch*_*counter[0..nb*_*LUT*_*entry-1];*
for the second loop (G varying from "4" to "1019", R = B = 64), two tables of counters are created: *positive*_*R*_*clip*_*on*_*green_patch*_*counter[0..nb*_*LUT*_*entry-1]* and *positive_B_clip*_*on*_*green_patch_counter[0..nb*_*LUT*_*entry-1];*
for the third loop (B varying from "4" to "1019", R = G = 64), two tables of counters are created: *positive*_*R*_*clip*_*on*_*blue_patch_counter[0..nb*_*LUT*_*entry-1]* and *positive*_*G*_*clip*_*on_blue_patch_counter[0..nb*_*LUT*_*entry-1];*
for the fourth loop (R = B varying from "4" to "1019", G = 64), one table of counters is created: *positive*_*G*_*clip*_*on*_*magenta*_*patch_counter[0..nb*_*LUT*_*entry-1];*
for the fifth loop (G = B varying from "4" to "1019", R = 64), one table of counters is created: *positive*_*R*_*clip*_*on*_*cyan*_*patch_counter[0..nb*_*LUT*_*entry-1];*
for the sixth loop (R = G varying from "4" to "1019", B = 64), one table of counters is created: *positive*_*B*_*clip*_*on*_*yellow*_*patch_counter[0..nb*_*LUT*_*entry-1].*

Then, for each R, G and B value in the "6" loops, a first conversion transforms the extended range value in an extended full range value using an extended range to extended full Range conversion based on the following formula: ${X}_{efr} = \frac{\left({X}_{er}-64\right)}{876} \times 1023$ where *X* is the component R, G or B, *Xₑᵣ* is a value in extended range (i.e., in [4..1019]) and *X_{efr}* is a value in extended full range (i.e. in [-70,068..1115.256]).

In step 802, the processing module 20 then applies a first conversion of a RGB pixel ${P}_{{RGB}_{1}^{lin}}$ of the RGB data ${RGB}_{1}^{lin}$ extended full range in a pixel ${P}_{{YUV}_{2}}$ of the YUV data *YUV*₂ extended range.

During the first conversion, for each pixel ${P}_{{RGB}_{1}^{lin}}$ of the independent loops, the processing module 20 applies steps 112, 113 and 114 to the pixel ${P}_{{RGB}_{1}^{lin}}$ to obtain a pixel *P*_{*YUV*₂}*.* The pixel *P*_{*YUV*₂} is quantized on "10" bits. The conversion from extended full range to extended range is done in step 114.

Then, in steps 803 to 807 the processing module 20 applies three imbricated loops around each component of the pixel *P*_{*YUV*₂}*.* More precisely, if the components of a pixel *P*_{*YUV*₂} are (*y*, *u, v),* the processing module loops on the values *y-1, y* and *y*+*1* for the component y, on the values *u-1, u* and *u+1* for the component *u,* and on the values *v-1, v* and *v*+1 for the component *v*. Therefore, for each pixel *P*_{*YUV*₂}, the processing modules 20 obtains "27" virtual pixels *p_{YUV}* around the pixel *P*_{*YUV*₂}*.* Each virtual *p_{YUV}* has therefore a value neighboring the value of the pixel *P*_{*YUV*₂} (or equal to the value of the pixel *P*_{*YUV*₂} when the virtual pixel is *P*_{*YUV*₂}).

In step 803 the processing module 20 determines if all virtual pixel *p_{YUV}* around the pixel *P*_{*YUV*₂} had been considered.

If a new virtual pixel *p_{YUV}* need to be considered, the processing module 20 applies a second conversion to the virtual pixel *p_{YUV}* in a step 804. To do so, the processing module 20 applies steps 130, 131 and 132 to the virtual pixel *p_{YUV}* in extended range to obtain a converted virtual pixel ${p}_{{RGB}_{3}^{lin}}$ of the RGB data ${RGB}_{3}^{lin}$ in extended full range. The conversion from extended range to extended full range is done during step 130.

Then for each converted virtual pixel ${p}_{{RGB}_{3}^{lin}}$, the processing module 20 determines in a step 805 if the converted virtual pixel ${p}_{{RGB}_{3}^{lin}}$ is out of the color gamut CG3. To do so, the processing module 20 determines if the component R *R*_*close*_*to*_*zero* (respectively G *G*_*close*_*to*_*zero* and B *B*_*close_to*_*zero*) that is supposed to be close to zero is of opposite sign from a component R *R*_*close*_*to*_*zero_pre* (respectively *G_close*_*to*_*zero*_*pre* or *B*_*close*_*to*_*zero*_*pre*) previously memorized for this converted virtual pixel ${p}_{{RGB}_{3}^{lin}}$ (if no component R *R*_*close*_*to*_*zero_pre* (respectively G *G*_*close_to_zero*_*pre* or B *B*_*close*_*to*_*zero*_*pre*) was previously memorized it is supposed that the previously stored component R *R*_*close*_*to*_*zero_pre* (respectively G *G_close_to zero*_*pre* or B *B*_*close*_*to_zero*_*pre*) was positive).

If the component R *R*_*close*_*to*_*zero* (respectively G *G*_*close*_*to*_*zero* and B *B*_*close*_*to*_*zero*) is of opposite sign from the component R *R*_*close*_*to*_*zero_pre* (respectively G *G*_*close*_*to*_*zero*_*pre* or B *B*_*close*_*to*_*zero*_*pre*) previously memorized, in a step 806, the processing module 20 applies a correction process consisting in:
inserting the value of the positive component R (respectively G and B) (either the current *R*_*close*_*to_zero* (resp. *G_close*_*to*_*zero* or *B*_*close to zero*) or the memorized one *R*_*close*_*to*_*zero*_*pre* (resp. *G_close_to_zero*_*pre* or *B*_*close to zero*_*pre*)) in the appropriate LUT at the appropriate LUT entry (as described in the following);
incrementing the counter for the current LUT entry of one unit; and,
memorizing the component *R*_*close*_*to*_*zero* (resp. *G*_*close*_*to*_*zero* or *B*_*close*_ *to zero*) for the next YUV iteration (i.e., *R*_*close*_*to_zero_pre= R*_*close*_*to*_*zero* (resp. *G_close*_*to*_*zero*_*pre= G*_*close*_*to*_*zero* or *B*_*close*_*to*_*zero_pre= B*_*close to zero*)*.*

For instance, in the first loop, a pixel ${P}_{{RGB}_{1}^{lin}}$ of the RGB data ${RGB}_{1}^{lin}$ has the following components (R = 0.52315, G = -0.001, B = 0.004). The pixel ${P}_{{RGB}_{1}^{lin}}$ allows obtaining a pixel *P*_{*YUV*₂} with components (*y*, *u, v).* The component G of a current converted virtual pixel ${p}_{{RGB}_{3}^{lin}}$ derived from a current virtual pixel *p_{YUV}* (y, u-1, v) is *G*_*close*_*to*_*zero* = -0.001. The component G of a previous converted virtual pixel ${p}_{{RGB}_{3}^{lin}}$ of a previous virtual pixel *p_{YUV}* (y, u-1, v-1) *G*_*close*_*to*_*zero*_*pre* = 0.002. *G_close*_*to*_*zero* and *G*_*close*_*to*_*zero*_*pre* are therefore of opposite signs. In that case, the correction process of step 806 is applied as follows (using a 1/100 quantization the component R = 0.52315 becomes *R_{q}* = (int)(0.52315 × 100 + 0.5) + LUT_{entry_{shift}} = 58):
inserting the value of the positive component *G*_*close*_*to*_*zero*_*pre* in the LUT *positive*_*G*_*clip*_*on*_*red*_*patch* at the LUT entry "58": *positive*_*G*_*clip*_*on*_*red*_*patch*[58] += 0.002;
incrementing the corresponding counter for the LUT entry 58, *positive*_*G_clip_on_red_patch_counter*[58] *+=* 1.

Step 806 is followed by step 803.

In step 805, if the component *R*_*close*_*to*_*zero* (respectively *G*_*close*_*to*_*zero* and *B*_*close*_*to*_*zero*) has the same sign than the component *R_close*_*to_zero* (respectively *G_close*_*to*_*zero* or *B*_*close*_*to*_*zero*) previously memorized, the processing module 20 returns to step 803.

If at step 803, all possible virtual pixels *p_{YUV}* around pixel *P*_{*YUV*₂} had been considered, step 803 is followed by a step 807.

During step 807, for each LUT entry, the processing module 20 computes an average value of each LUT entry by dividing it by the counter value of the corresponding LUT entry:
for the first loop (R varying from "4" to "1019", G = B = 64): for each LUT entry *cur*_*entry: positive*_*G_clip*_*on_red_patch[cur_entry]* = *positive*_*G_clip*_*on_red_patch[cur*_*entry]*/*positive*_*G_clip*_*on_red*_*patch_counter[cu r*_*entry]* and *positive*_*B*_*clip*_*on*_*red*_*patch[cur_entry]* = *positive_B_clip*_*on_red_patch[cur_entry]*/*positive*_*B*_*clip*_*on_red_patch_counter[cu r*_*entry]*;
for the second loop (G varying from "4" to "1019", R = B = 64): for each LUT entry *cur*_*entry: positive_R_clip*_*on*_*green*_*patch[cur*_*entry]* = *positive*_*R*_*clip*_*on_green*_*patch[cur*_*entry]*/*positive*_*R*_*clip*_*on_green_patch_counte r[cur_entry]* and *positive*_*B*_*clip*_*on_green*_*patch[cur*_*entry]* = *positive_B_clip*_*on_green*_*patch[cur*_*entry]*/*positive*_*B*_*clip*_*on*_*green*_*patch*_*counte r[cur_entry];*
for the third loop (B varying from "4" to "1019", R = G = 64): for each LUT entry *cur*_*entry*: *positive_R_clip*_*on_blue_patch[cur_entry]* = *positive*_*R*_*clip*_*on*_*blue_patch[cur_entry]*/*positive*_*R*_*clip*_*on*_*blue*_*patch*_*counter[ cur_entry]* and *positive*_*G*_*clip*_*on*_*blue*_*patch[cur*_*entry]* = *positive*_*G*_*clip*_*on*_*blue*_*patch[cur*_*entry]*/*positive*_*G*_*clip*_*on*_*green*_*blue*_*counter[ cur_entry];*
for the fourth loop (R = B varying from "4" to "1019", G = 64): for each LUT entry *cur_entry: positive_G_clip*_*on*_*magenta*_*patch[cur_entry]* = *positive*_*G*_*clip*_*on_magenta_patch[cur_entry]*/*positive_G_clip*_*on_magenta*_*patch_ counter[cur_entry];*
for the fifth loop (G = B varying from "4" to "1019", R = 64): for each LUT entry *cur*_*entry: positive*_*R*_*clip*_*on*_*cyan*_*patch[cur*_*entry]* = *positive*_*R*_*clip*_*on_cyan_patch[cur_entry]*/*positive*_*R*_*clip*_*on*_*cyan*_*patch*_*counter[ cur_entry];*
for the sixth loop (R = G varying from "4" to "1019", B = 64): for each LUT entry *cur*_*entry: positive*_*B*_*clip*_*on*_*yellow*_*patch[cur*_*entry]* = *positive_B_clip*_*on_yellow*_*patch[cur*_*entry]*/*positive*_*B*_*clip*_*on*_*yellow*_*patch*_*coun ter[cur_entry].*

After this step, each LUT entry *positive*_*XX*_*clip*_*on_YY_patch[cur_entry]* (*XX* being one among R, G and B, *YY* being one among red, green, blue, magenta, cyan and yellow) represents an average of positive components *XX* of converted virtual pixels ${p}_{{RGB}_{3}^{lin}}$ obtained from virtual pixels *p_{YUV}* with values neighboring or close to the value of the pixel *P*_{*YUV*₂}*.*

Step 807 is followed by the step 801.

If at step 801, all boundary pixels were processed, the processing module 20 continues with step 808.

During step 808, the processing module 20 applies a process for determining a clipping curve.

From each LUT *positive*_*XX*_*clipo*_*n*_*YY_patch* the processing module 20 determines a model approximating a point cloud representing each entry of the LUT *positive_XX*_*clip*_*on*_*YY_patch.* When plotting each of the nine LUTs (shifting each LUT entry by the *LUT*_*entry*_*shift* value, from [0..115] to [-6..109] when using a LUT with a 1/100 quantization), one can notice the trends of the positive value of the clip around value zero.

In an embodiment, the model is at least one straight line the closest to points of the point cloud representing each entry of the LUT *positive_XX_clip*_*on*_*YY*_*patch.* A first derivative (and optionally a value in zero) is then determined from each straight line.

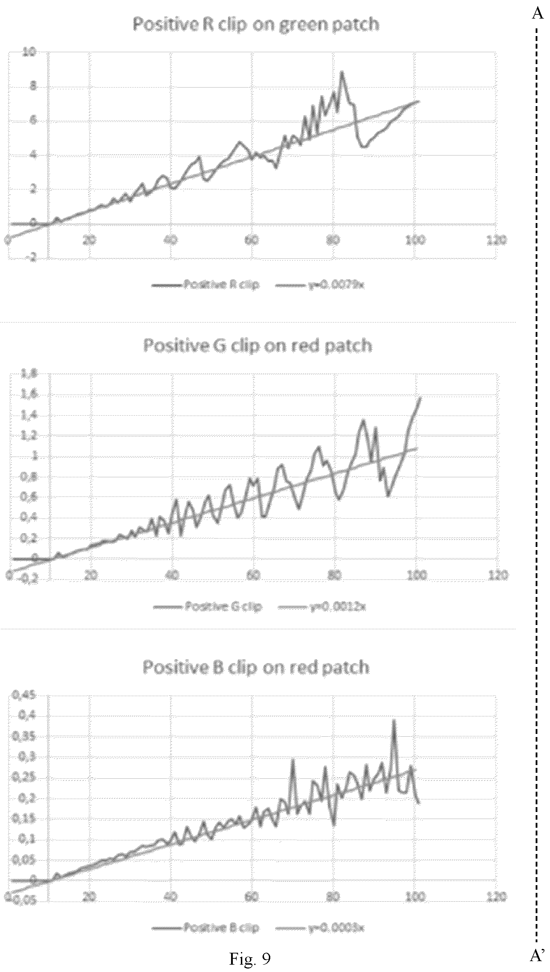

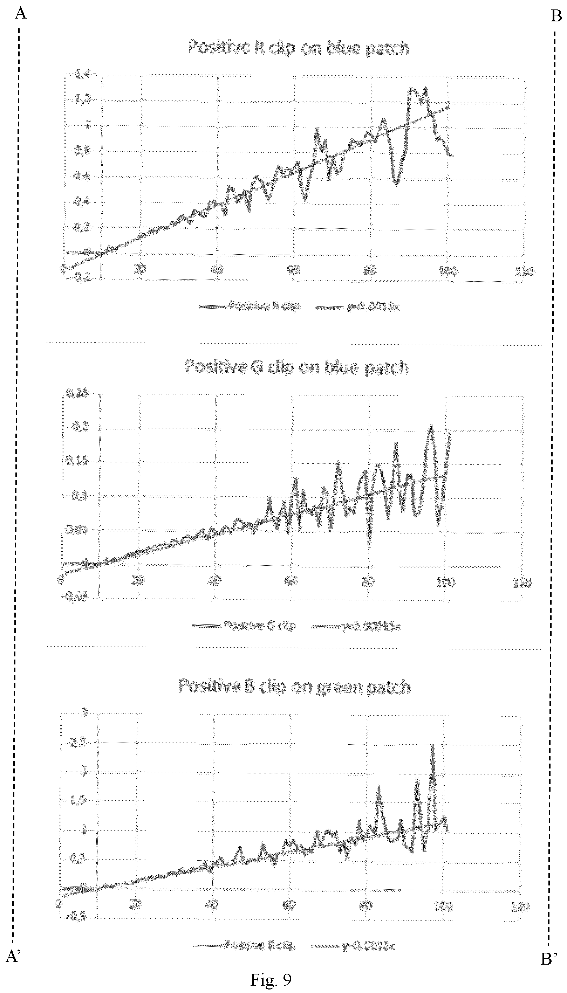

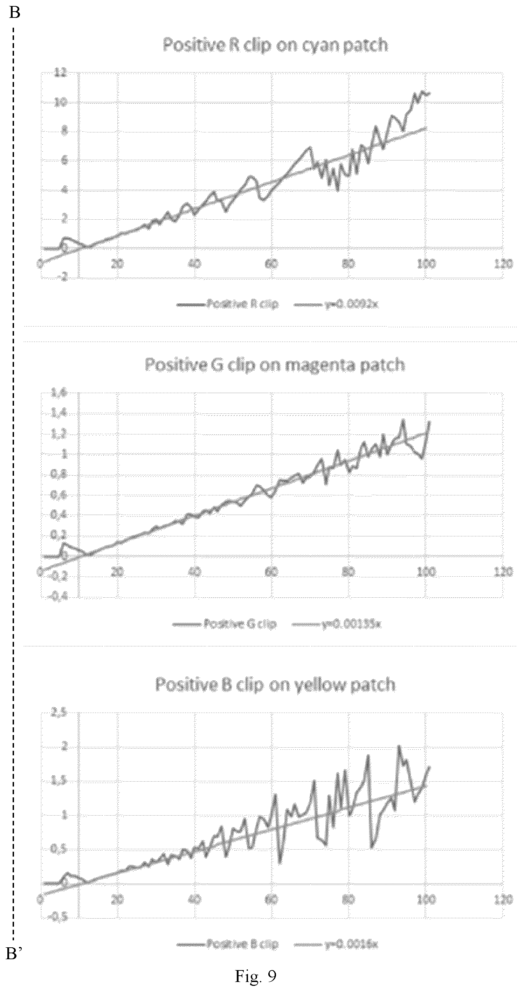

For instance, when dealing with PQ transfer function, the straight lines are provided in **Fig. 9****.** In Fig. 9 the straight line approximate the point cloud represented by the non-straight line.

One can notice that:
The LUT *positive*_*R*_*clip_on*_*green_patch* may be approximated by a straight line with y = 0.0079x;
The LUT *positive*_*R*_*clip*_*on*_*blue*_*patch* may be approximated by a straight line with y = 0.0013x;
The LUT *positive*_*R*_*clip*_*on*_*cyan*_*patch* may be approximated by a straight line with y = 0.0092x. One can note that this corresponds to the sum of the LUT *positive*_*R*_*clip*_*on*_*green_patch* with *positive*_*R*_*clip*_*on_blue_patch* which is consistent with the fact that cyan is the addition of green and blue;
The LUT *positive*_*G*_*clip*_*on_red_patch* may be approximated by a straight line with y = 0.0012x;
The LUT *positive_G_clip*_*on_blue_patch* may be approximated by a straight line with y = 0.00015x;
The LUT *positive*_*G*_*clip*_*on*_*magenta_patch* may be approximated by a straight line with y = 0.00135x. One can note that this corresponds to the sum of the LUT *positive*_*G*_*clip*_*on*_*magenta*_*patch* with *positive*_*G*_*clip*_*on*_*blue*_*patch,* which is consistent with the fact that magenta is the addition of red and blue;
The LUT *positive*_*B*_*clip*_*on_red patch* may be approximated by a straight line with y = 0.0003x;
The LUT *positive*_*B*_*clip*_*on*_*green_patch* may be approximated by a straight line with y = 0.0013x;
The LUT *positive*_*B*_*clip*_*on_yellow_patch* may be approximated by a straight line with y = 0.0016x. One can note that this corresponds to the sum of the LUT *positive*_*B*_*clip*_*on*_*red patch* with *positive*_*B*_*clip*_*on*_*green*_*patch,* which is consistent with the fact that yellow is the addition of red and green.

Similarly, when dealing with HLG transfer function:
the LUT *positive*_*R*_*clip*_*on*_*green_patch* may be approximated by a straight line with y = 0.0047x;
the LUT *positive*_*R*_*clip*_*on*_*blue*_*patch* may be approximated by a straight line with y = 0.0007x;
the LUT *positive*_*R*_*clip*_*on*_*cyan*_*patch* may be approximated by a straight line with y = 0.0054x. Please note that this corresponds to the sum of the LUT *positive R clipping value on a green patch* with the LUT *positive R clipping value on a blue patch,* and this is consistent with the fact that cyan is the addition of green and blue;
the LUT *positive G clipping value on a red patch* may be approximated by a straight line with y = 0.0007x;
the LUT *positive G clipping value on a blue patch* may be approximated by a straight line with y = 0.0001x;
the LUT *positive G clipping value on a magenta patch* may be approximated by a straight line with y = 0.0008x. Please note that this corresponds to the sum of the LUT *positive G clipping value on a red patch* with the LUT *positive G clipping value on a blue patch,* and this is consistent with the fact that magenta is the addition of red and blue
the LUT *positive B clipping value on a red patch* may be approximated by a straight line with y = 0.0002x.
the LUT *positive B clipping value on a green patch* may be approximated by a straight line with y = 0.0006x.
the LUT *positive B clipping value on a yellow patch* may be approximated by a straight line with y = 0.0008x. Please note that this corresponds to the sum of the LUT *positive B clipping value on a red patch* with the LUT *positive B clipping value on a green patch,* and this is consistent with the fact that yellow is the addition of red and green.

One can notice that a single straight line may not be sufficient for representing a point cloud and obtaining a representative trend. This is particularly the case when dealing with the gamma 2.4 transfer function specified in BT.1886. In that case, in an alternative embodiment, two straight lines are used. In that solution, the final trend is obtained by taking a minimum value of two straight lines D1 (typically y=ax) and D2 (typically y=ax+b).

One can notice:
The LUT *positive*_*R*_*clip*_*on*_*green_patch* may be approximated by straight line D1 with (y = 0.01x) and a straight line D2 with (y = 0.0023x+0.6).

The LUT *positive*_*R*_*clip*_*on*_*blue*_*patch* may be approximated by a straight line D1 with (y = 0.004x) and a straight line D2 with (y = 0.0005x+0.15).

The LUT *positive*_*R*_*clip*_*on*_*cyan*_*patch* may be approximated by a straight line D1 with (y = 0.014x) and a straight line D2 with (y = 0.0028x+0.75). One can note that this corresponds to the sum of the LUT *positive*_*R*_*clip*_*on*_*green*_*patch* with *positive* _*R*_*clip*_*on*_*blue_patch* which is consistent with the fact that cyan is the addition of green and blue.

The LUT *positive*_*G*_*clip*_*on*_*red*_*patch* may be approximated by a straight line D1 with (y = 0.002x) and a straight line D2 with (y = 0.0004x+0.1).

The LUT *positive*_*G clip*_*on_blue_patch* may be approximated by straight line D1 with (y = 0.0005x) and a straight line D2 with (y = 0.0001x+0.03).

The LUT *positive*_*G*_*clip*_*on*_*magenta_patch* may be approximated by a straight line D1 with (y = 0.0025x) and a straight line D2 with (y = 0.0005x+0.13). One can note that this corresponds to the sum of the LUT *positive*_*G*_*clip*_*on*_*magenta*_*patch* with *positive*_*G*_*clip*_*on*_*blue*_*patch,* which is consistent with the fact that magenta is the addition of red and blue.

The LUT *positive*_*B*_*clip*_*on_red_patch* may be approximated by a straight line D1 with (y = 0.0015x) and a straight line D2 with (y = 0.0002x+0.065).

The LUT *positive*_*B*_*clip*_*on*_*green_patch* may be approximated by a straight line D1 with (y = 0.005x) and a straight line D2 with (y = 0.0006x+0.15).

The LUT *positive*_*B*_*clip*_*on_yellow_patch* may be approximated by a straight line D1 with (y = 0.0065x) and a straight line D2 with (y = 0.0008x+0.215). One can note that this corresponds to the sum of the LUT *positive*_*B*_*clip*_*on_red*_*patch* with *positive*_*B*_*clip*_*on*_*green*_*patch,* which is consistent with the fact that yellow is the addition of red and green.

It should be noted that, while until now straight lines were used for representing a point cloud, in a variant, the point clouds may be approximated by any other curve such as straight lines with offset, polynomial functions, splines, ...

Given these data, the processing module 20 determines "18" clipping constants:
*R_G_clip : R_G_clip* represents the first derivative of the straight line D1 derived from the LUT *positive_R_clip*_*on*_*green_patch;*
*R*_*B*_*clip : R*_*B*_*clip* represents the first derivative of the straight line D1 derived from the LUT *positive_R_clip*_*on*_*blue_patch;*
*G_R_clip : G_R_clip* represents the first derivative of the straight line D1 derived from the LUT *positive*_*G*_*clip*_*on*_*red*_*patch;*
*G*_*B*_*clip : G*_*B*_*clip* represents the first derivative of the straight line D1 derived from the LUT *positive_G*_*clip*_*on*_*blue_patch;*
*B*_*R*_*clip : B*_*R*_*clip* represents the first derivative of the straight line D1 derived from the LUT *positive*_*B*_*clip*_*on*_*red*_*patch*;
*B_G_clip : B_G_clip* represents the first derivative of the straight line D1 derived from the LUT *positive*_*B*_*clip*_*on*_*green*_*patch*;
*R*_*G*_*clip*_*2 : R_G_clip*_*2* represents the first derivative of the straight line D2 derived from the LUT *positive_R_clip*_*on_green*_*patch*;
*R_B*_*clip*_*2 : R*_*B*_*clip*_*2* represents the first derivative of the straight line D2 derived from the LUT *positive_R_clip*_*on*_*blue_patch;*
*G_R_clip*_*2 : G_R_clip_2* represents the first derivative of the straight line D2 derived from the LUT *positive*_*G*_*clip*_*on_red_patch;*
*G*_*B*_*clip*_*2 : G_B_clip*_*2* represents the first derivative of the straight line D2 derived from the LUT *positive_G*_*clip*_*on_blue_patch;*
*B*_*R*_*clip*_*2 : B_R*_*clip_2* represents the first derivative of the straight line D2 derived from the LUT *positive*_*B*_*clip*_*on_red*_*patch*;
*B_G_clip*_*2 : B_G_clip*_*2* represents the first derivative of the straight line D2 derived from the LUT *positive_B*_*clip*_*on*_*green*_*patch;*
*R*_*G*_*offset*_*2* : *R*_*G_offset*_*2* represents the value in zero of the straight line D2 derived from the LUT *positive_R_clip*_*on_green*_*patch*;
*R_B*_*offset*_*2 : R*_*B*_*offset*_*2* represents the value in zero of the straight line D2 derived from the LUT *positive_R_clip*_*on_blue_patch;*
*G_R_offset*_*2 : G R offset*_2 represents the value in zero of the straight line D2 derived from the LUT *positive*_*G_clip*_*on_red_patch;*
*G_B_offset*_*2 : G_B_offset*_*2* represents the value in zero of the straight line D2 derived from the LUT *positive_G*_*clip*_*on_blue_patch;*
*B_R*_*offset*_*2 : B*_*R*_*offset*_*2* represents the value in zero of the straight line D2 derived from the LUT *positive_B_clip*_*on_red_patch;*
*B_G_offset*_*2 : B*_*G*_*offset*_2 represents the value in zero of the straight line D2 derived from the LUT *positive_B*_*clip*_*on_green*_*patch*;.
When D2 is not used, as for PQ and HLG transfer functions for which only the first derivative of D1 with no zero offset is enough, xx_yy_clip_2 values are all equal to "1" and xx_yy_offset2 values are all equal to "0".

These 18 constants values depend on the transfer function:
If PQ :
   *R*_*G*_*clip* = 0.0079;
   *R*_*B*_*clip =* 0.0013;
   *G_R_clip =* 0.0012;
   *G_B_clip =* 0.00015;
   *B_R*_*clip =* 0.0003;
   *B_G_clip =* 0.0013;
   *R*_*G*_*clip*_*2 =* 0*;*
   *R*_*B*_*clip*_*2 =* 0;
   *G_R_clip*_2 = 0;
   *G*_*B*_*clip*_*2* = 0;
   *B*_*R*_*clip*_*2 =* 0*;*
   *R*_*G*_*clip*_*2 = 0;*
   *R_G_offset*_*2 =* 1;
   *R*_*B_offset*_*2 =* 1;
   *G_R_offset*_*2 =* 1;
   *G_B_offset*_*2 =* 1;
   *B*_*R*_*offset*_*2 =* 1;
   *B_G_offset*_*2 =* 1*.*
If HLG:
   *R*_*G*_*clip =* 0.0047;
   *R*_*B*_*clip =* 0.0007;
   *G_R_clip =* 0.0007;
   *G_B_clip =* 0.0001;
   *B_R*_*clip =* 0.0002;
   *B_G_clip =* 0.0006;
   *R*_*G*_*clip*_*2 =* 0*;*
   *R*_*B*_*clip*_*2 =* 0*;*
   *G*_*R*_*clip*_*2 =* 0*;*
   *G*_*B*_*clip*_*2* = 0;
   *B*_*R*_*clip*_*2 =* 0*;*
   *R*_*G*_*clip*_*2 =* 0;
   *R*_*G*_*offset*_*2 =* 1;
   *R*_*B*_*offset*_*2 =* 1;
   *G_R_offset*_*2 =* 1; $G _ B _ offset _ 2 = 1 ;$ $B _ R _ offset _ 2 = 1 ;$ $B _ G _ offset _ 2 = 1 .$
If BT.1886 : $R _ G _ clip = 0.003 ;$ $R _ B _ clip = 0.0008 ;$ $G _ R _ clip = 0.00055 ;$ $G _ B _ clip = 0.00015 ;$ $B _ R _ clip = 0.0003 ;$ $B _ G _ clip = 0.0008 ;$ $R _ G _ clip _ 2 = 0.0023 ;$ $R _ B _ clip _ 2 = 0.0005 ;$ $G _ R _ clip _ 2 = 0.0004 ;$ $G _ B _ clip _ 2 = 0.0001 ;$ $B _ R _ clip _ 2 = 0.0002 ;$ $B _ G _ clip _ 2 = 0.0006 ;$ $R _ G _ offset _ 2 = 0.6 ;$ $R _ B _ offset _ 2 = 0.15 ;$ $G _ R _ offset _ 2 = 0.1 ;$ $G _ B _ offset _ 2 = 0.03 ;$ $B _ R _ offset _ 2 = 0.065 ;$ $B _ G _ offset _ 2 = 0.15 .$

These clipping constants allow determining clipping curves used in the gamut clipping method of step 713.

In particular, the clipping constants allow defining the three clipping values R_low_clip_value, G_low_clip_value and B_low_clip_value as follows:$R _ low _ clip _ value = MIN \left(\begin{matrix}\left(R_G_clip*G_{P}_{{RGB}_{3}^{lin}}+R_B_clip*B_{P}_{{RGB}_{3}^{lin}}\right) , \\ \left(R_G_clip_2*G_{P}_{{RGB}_{3}^{lin}}+R_G_offset_2+R_B_clip_2*B_{P}_{{RGB}_{3}^{lin}}+R_B_offset_2\right)\end{matrix}\right) ;$$G _ low _ clip _ value = MIN \left(\begin{matrix}\left(G_R_clip*R_{P}_{{RGB}_{3}^{lin}}+G_B_clip*B_{P}_{{RGB}_{3}^{lin}}\right) , \\ \left(\begin{matrix}G _ R _ clip _ 2 * R _ {P}_{{RGB}_{3}^{lin}} + G _ R _ ofsett _ 2 + G _ B _ clip _ 2 * B _ {P}_{{RGB}_{3}^{lin}} + \\ G _ B _ offset _ 2\end{matrix}\right)\end{matrix}\right) ;$ $B _ low _ clip _ value = MIN \left(\begin{matrix}\left(B_R_clip*R_{P}_{{RGB}_{3}^{lin}}+B_G_clip*G_{P}_{{RGB}_{3}^{lin}}\right) , \\ \left(\begin{matrix}B _ R _ clip _ 2 * R _ {P}_{{RGB}_{3}^{lin}} + B _ R _ offset _ 2 + B _ G _ clip _ 2 * G _ {P}_{{RGB}_{3}^{lin}} + \\ B _ G _ offset _ 2\end{matrix}\right)\end{matrix}\right)$where $R _ {P}_{{RGB}_{3}^{lin}}$ (respectively $G _ {P}_{{RGB}_{3}^{lin}}$ and $B _ {P}_{{RGB}_{3}^{lin}}$) represents the component R (respectively the component G and B) of a pixel ${P}_{{RGB}_{3}^{lin}}$ of the RGB data ${RGB}_{3}^{lin}$.

The clipping curves allow clipping to a low positive value each component of the RGB data ${RGB}_{3}^{lin}$ that is negative or below the low positive value. In other words, the three clipping values *R*_*low*_*clip*_*value, G*_*low*_*clip*_*value* and *B_low*_*clip*_*value* define low positive values with which each component $R _ {P}_{{RGB}_{3}^{lin}} , G _ {P}_{{RGB}_{3}^{lin}}$ or $B _ {P}_{{RGB}_{3}^{lin}}$ should be replaced when the component $R _ {P}_{{RGB}_{3}^{lin}} , G _ {P}_{{RGB}_{3}^{lin}}$ or $B _ {P}_{{RGB}_{3}^{lin}}$ is around zero, either positive or negative. However, doing so prevents sub-black level preservation. When the component $R _ {P}_{{RGB}_{3}^{lin}} , G _ {P}_{{RGB}_{3}^{lin}}$ or $B _ {P}_{{RGB}_{3}^{lin}}$ is negative and below a certain value, a negative value should be kept for the component $R _ {P}_{{RGB}_{3}^{lin}}$, $G _ {P}_{{RGB}_{3}^{lin}}$ or $B _ {P}_{{RGB}_{3}^{lin}}$, to ensure sub-black levels preservation.

Sub-black levels generally concern the luminance component Y and not the UV chrominance components. In other words, for sub-black levels, chrominance components U and V are generally close to their achromatic value, i.e. value "512" in "10" bits coding (see Table 9 of document *Recommendation ITU-R BT.709-6, Parameter values for the HDTV standards for production and international programme exchange, 06*/*2015*)*.* This also means that components R and G and B are equal or very close to each other.

However, due to cumulative errors due to quantization and computation steps of any system, some cases can appear where the values of R, G and B components are positive and negative when dealing with sub-black levels. Such situations should not introduce any artefact such as instability between surrounding pixels at the output of the clipping process.

In order to respect the second clipping characteristic, the application of the clipping based on the clipping curves on a component of a pixel of the RGB data ${RGB}_{3}^{lin}$ in the clipping method of step 713 comprises a pre-conditioning step relying on a detection of a sub-black level in this pixel.

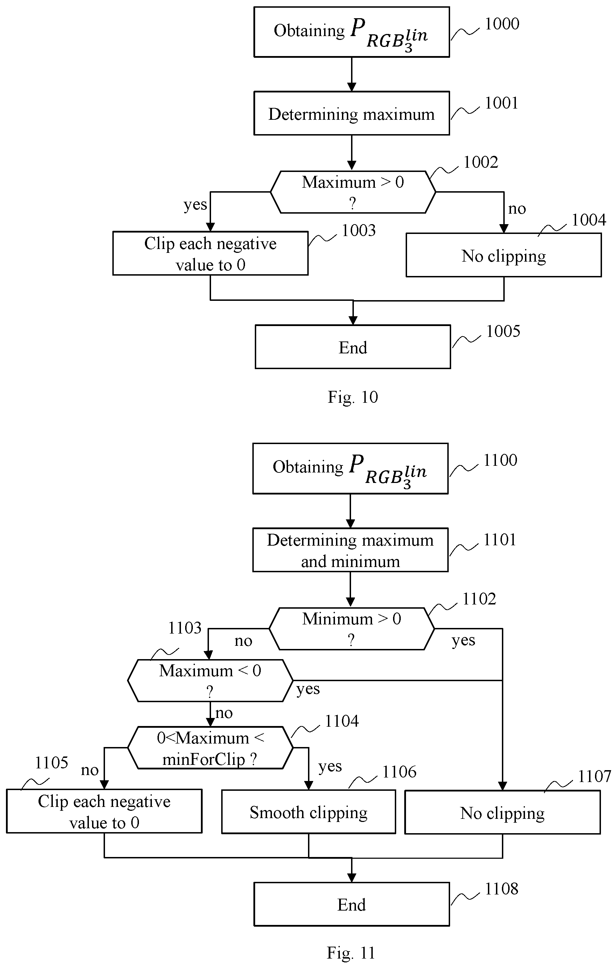

**Fig 10** illustrates schematically a first embodiment of the pre-conditioning step.

The pre-conditioning method of Fig. 10 is applied to all pixels ${P}_{{RGB}_{3}^{lin}}$ of the RGB data ${RGB}_{3}^{lin}$.

The first embodiment of the pre-conditioning step is to check if at least one of the components R, G or B is positive. If yes, it ensures that all "3" components R, G and B components are positive by clipping the negative values to zero if needed.

In a step 1000, the processing module 20 obtains a pixel ${P}_{{RGB}_{3}^{lin}}$. The pixel ${P}_{{RGB}_{3}^{lin}}$ has the components ( $R _ {RGB}_{3}^{lin} , G _ {RGB}_{3}^{lin} , B _ {RGB}_{3}^{lin} ,$).

In a step 1001, the processing module 20 determines the maximum MAX between $R _ {RGB}_{3}^{lin} , G _ {RGB}_{3}^{lin}$ and $B _ {RGB}_{3}^{lin}$.

In a step 1002, if MAX>0, the processing module 20 continues with a step 1003 during which a clipping is applied. Otherwise the processing module 20 continues with a step 1004 during which no clipping is applied.

During this clipping in step 1003, pre-conditioned values are computed as follows: $Pre _ R _ {RGB}_{3}^{lin} = max \left(0, R_{RGB}_{3}^{lin}\right) ;$ $Pre _ G _ {RGB}_{3}^{lin} = max \left(0, G_{RGB}_{3}^{lin}\right) ;$ $Pre _ B _ {RGB}_{3}^{lin} = max \left(0, B_{RGB}_{3}^{lin}\right) .$

During step 1004 pre-conditioned values are computed as follows: $Pre _ R _ {RGB}_{3}^{lin} = R _ {RGB}_{3}^{lin} ;$ $Pre _ G _ {RGB}_{3}^{lin} = G _ {RGB}_{3}^{lin} ;$ $Pre _ B _ {RGB}_{3}^{lin} = B _ {RGB}_{3}^{lin} .$

Steps 1003 and 1004 are followed by a step 1005 during which the processing module 20 ends the application of the clipping method.

**Fig. 11** illustrates schematically a second embodiment of the pre-conditioning step.

The pre-conditioning method of Fig. 11 is applied to all pixels ${P}_{{RGB}_{3}^{lin}}$ of the RGB data ${RGB}_{3}^{lin}$.

In a step 1100, the processing module 20 obtains a pixel ${P}_{{RGB}_{3}^{lin}}$. The pixel ${P}_{{RGB}_{3}^{lin}}$ has the components ( $R _ {RGB}_{3}^{lin} , G _ {RGB}_{3}^{lin} , B _ {RGB}_{3}^{lin}$).

In a step 1101, the processing module 20 determines the minimum MIN and the maximum MAX of the components $R _ {RGB}_{3}^{lin} , G _ {RGB}_{3}^{lin}$ and $B _ {RGB}_{3}^{lin}$.

In a step 1102, the processing module 20 determines if MIN is greater than zero. If yes, step 1102 is followed by a step 1107. During step 1107 pre-conditioned values are computed as follows: $Pre _ R _ {RGB}_{3}^{lin} = R _ {RGB}_{3}^{lin} ;$ $Pre _ G _ {RGB}_{3}^{lin} = G _ {RGB}_{3}^{lin} ;$ $Pre _ B _ {RGB}_{3}^{lin} = B _ {RGB}_{3}^{lin} .$

If MIN≤0, step 1102 is followed by a step 1103. During step 1103, the processing module 20 determines if the maximum MAX is lower than zero. If MAX<0, step 1103 is followed by step 1107.

Otherwise, step 1103 is followed by a step 1104.

During step 1104, the processing module 20 determines if the maximum MAX is positive and below a predefined low value *minForClip* (0<*MAX*≤*minForClip*). If yes, step 1104 is followed by a step 1106. Otherwise (MAX≥minForClip), step 1104 is followed by a step 1105.

During step 1105, pre-conditioned values are computed as follows: $Pre _ R _ {RGB}_{3}^{lin} = max \left(0, R_{RGB}_{3}^{lin}\right) ;$ $Pre _ G _ {RGB}_{3}^{lin} = max \left(0, G_{RGB}_{3}^{lin}\right) ;$ $Pre _ B _ {RGB}_{3}^{lin} = max \left(0, B_{RGB}_{3}^{lin}\right) .$

During step 1106, the pre-conditioned values are computed as follows:
If $R _ {RGB}_{3}^{lin} < 0$ then $Pre _ R _ {RGB}_{3}^{lin} = R _ {RGB}_{3}^{lin} \times MULT _ VALUE$; otherwise $Pre _ R _ {RGB}_{3}^{lin} = R _ {RGB}_{3}^{lin} ;$
If $G _ {RGB}_{3}^{lin} < 0$ then $Pre _ G _ {RGB}_{3}^{lin} = G _ {RGB}_{3}^{lin} \times MULT _ VALUE$; otherwise $Pre _ G _ {RGB}_{3}^{lin} = G _ {RGB}_{3}^{lin}$,
If $B _ {RGB}_{3}^{lin} < 0$ then $Pre _ B _ {RGB}_{3}^{lin} = B _ {RGB}_{3}^{lin} \times MULT _ VALUE$; otherwise $Pre _ B _ {RGB}_{3}^{lin} = B _ {RGB}_{3}^{lin}$.
MULT_VALUE is a weighting value.

In a first embodiment, MULT_VALUE = 1-MAX/minForClip.

In a second embodiment, $MULT _ VALUE = 1 - \sqrt{\frac{MAX}{minForClip}}$.

Any other progressive decreasing law could be used for MULT_VALUE, such as different power value, logarithmic law...

As can be seen, MULT_VALUE is in the range ]0; 1[.

The second embodiment of the pre-conditioning step intends to build a smoother pre-conditioning solution that allows negative values. In this second embodiment, if the maximum MAX is above the predefined low value *minForClip,* then the first embodiment applies. If the maximum MAX is below the predefined low value *minForClip,* then the potential R, G or B negative values are lowered progressively depending on the value of maximum MAX.

Once the pre-conditioning step is applied to the components $R _ {P}_{{RGB}_{3}^{lin}}$, $G _ {P}_{{RGB}_{3}^{lin}}$ and $B _ {P}_{{RGB}_{3}^{lin}}$ to obtain the components $Pre _ R _ {P}_{{RGB}_{3}^{lin}} , Pre _ G _ {P}_{{RGB}_{3}^{lin}}$ and $Pre _ B _ {P}_{{RGB}_{3}^{lin}}$, a negative passthrough clipping strategy is applied.

In a first embodiment of a clipping curve allowing a negative passthrough clipping strategy, the component $Pre _ R _ {P}_{{RGB}_{3}^{lin}}$ (respectively $Pre _ G _ {P}_{{RGB}_{3}^{lin}}$ and $Pre _ B _ {P}_{{RGB}_{3}^{lin}}$)is clipped to the clipping value *R_low*_*clip*_*value* (respectively *G_low*_*clip*_*value* and *B_low*_*clip*_*value*) when the component $Pre _ R _ {P}_{{RGB}_{3}^{lin}}$ (respectively $Pre _ G _ {P}_{{RGB}_{3}^{lin}}$ and $Pre _ B _ {P}_{{RGB}_{3}^{lin}}$) falls within the range [-*R_low*_*clip*_*value.. R_low_clip_value*] (respectively within the range [-*G_low*_*clip*_*value.. G_low_clip*_*value*] and the range [-*B_low*_*clip*_*value.. B_low*_*clip*_*value*]). Out of these ranges, no clipping is applied to a component $Pre _ R _ {P}_{{RGB}_{3}^{lin}}$ higher than *R_low*_*clip*_*value* (respectively to a component $Pre _ G _ {P}_{{RGB}_{3}^{lin}}$ higher than *G_low*_*clip*_*value* and to a component $Pre _ B _ {P}_{{RGB}_{3}^{lin}}$ higher than *B_low*_*clip*_*value*). A smooth clipping is applied to a component $Pre _ R _ {P}_{{RGB}_{3}^{lin}}$ lower than *-R_low*_*clip*_*value* (respectively a component $Pre _ G _ {P}_{{RGB}_{3}^{lin}}$ lower than -*G*_*low*_*clip*_*value* and a component $Pre _ B _ {P}_{{RGB}_{3}^{lin}}$ lower than *-B_low_clip*_*value*)*.*

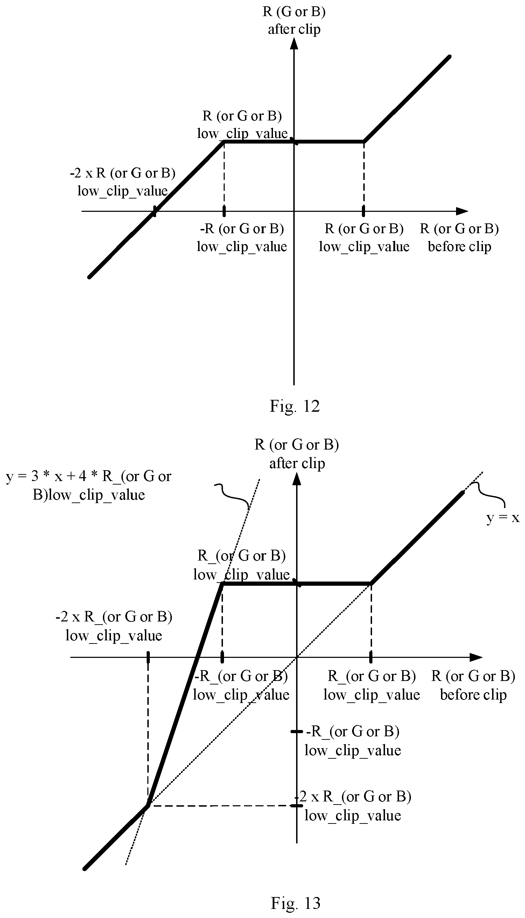

**Fig. 12** illustrates schematically the first embodiment of a clipping curve allowing a negative passthrough clipping strategy.

In Fig. 12:

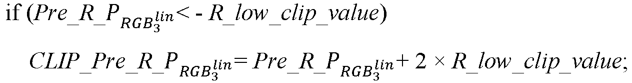

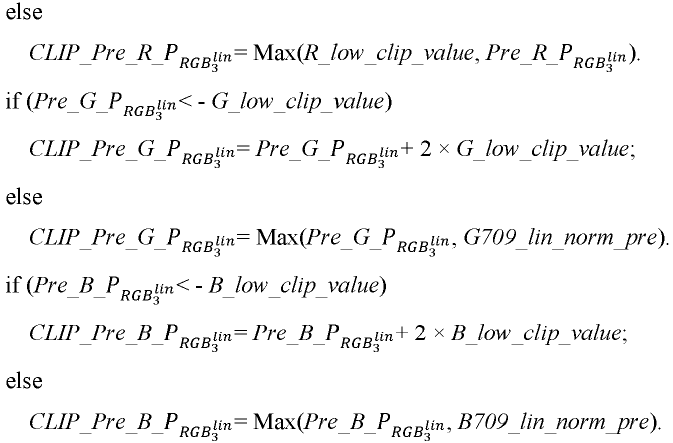

Where $CLIP _ Pre _ R _ {P}_{{RGB}_{3}^{lin}}$ is the result of the clipping of $Pre _ R _ {P}_{{RGB}_{3}^{lin}}$, $CLIP _ Pre _ G _ {P}_{{RGB}_{3}^{lin}}$ is the result of the clipping of $Pre _ G _ {P}_{{RGB}_{3}^{lin}}$ and $CLIP _ Pre _ R _ {P}_{{RGB}_{3}^{lin}}$ is the result of the clipping of $Pre _ B _ {P}_{{RGB}_{3}^{lin}}$.

In the first embodiment of a negative passthrough clipping strategy, when the negative component $Pre _ R _ {P}_{{RGB}_{3}^{lin}}$ (respectively $Pre _ G _ {P}_{{RGB}_{3}^{lin}}$ and $Pre _ B _ {P}_{{RGB}_{3}^{lin}}$) value is lower than the *-R*_*low*_*clip*_*value* (respectively *-G_low*_*clip*_*value* and - *B*_*low*_*clip*_*value*) value, this component $Pre _ R _ {P}_{{RGB}_{3}^{lin}}$ (respectively $Pre _ G _ {P}_{{RGB}_{3}^{lin}}$ and $Pre _ B _ {P}_{{RGB}_{3}^{lin}}$) value is modified (i.e., clipped) by adding to it 2 × *R_low*_*clip*_*value* (respectively 2 × *G*_*low*_*clip*_*value* and 2 × *B_low*_*clip*_*value*)*.*

In the second embodiment of a clipping curve allowing a negative passthrough clipping strategy, the negative component $Pre _ R _ {P}_{{RGB}_{3}^{lin}}$ (respectively $Pre _ G _ {P}_{{RGB}_{3}^{lin}}$ and $Pre _ B _ {P}_{{RGB}_{3}^{lin}}$) is modified (clipped) only on a limited range, and then below this range, is not modify.

**Fig. 13** illustrates schematically the second embodiment of a clipping curve allowing a negative passthrough clipping strategy.

In Fig. 13:

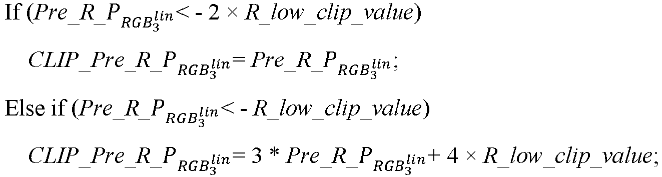

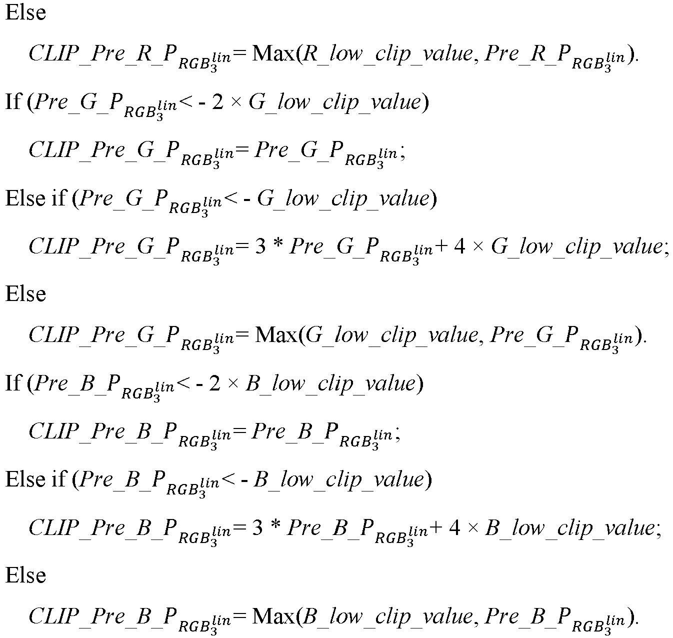

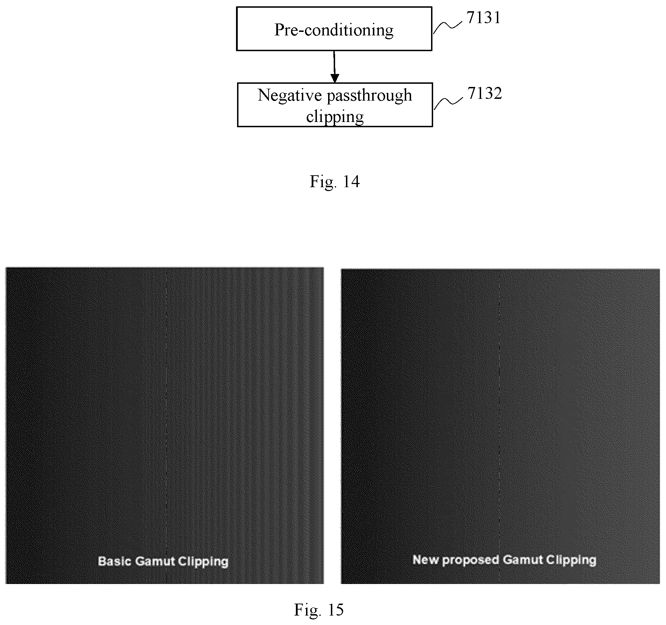

**Fig. 14** summarizes the clipping method applied in step 713 on each pixel ${P}_{{RGB}_{3}^{lin}}$ of the RGB data ${RGB}_{3}^{lin}$*.*

In a step 7131, the processing module 20 applied a pre-conditioning on the pixel ${P}_{{RGB}_{3}^{lin}}$ to obtain a pre-conditioned pixel with components ( $Pre _ R _ {P}_{{RGB}_{3}^{lin}}$, $Pre _ G _ {P}_{{RGB}_{3}^{lin}} , Pre _ G _ {P}_{{RGB}_{3}^{lin}}$)*.* The pre-conditioning allows respecting the second clipping characteristic, i.e., allows preserving the sub-black signals. During step 7131, the processing module applies the first embodiment of the pre-conditioning step of Fig. 10 or the second embodiment of the pre-conditioning step of Fig. 11.

In a step 7132, the processing module 20 applies a negative passthrough clipping using the first embodiment of a negative passthrough clipping strategy or the second embodiment of a negative passthrough clipping strategy. Step 7132 allows respecting the first clipping characteristic which implies not clipping negative values to "0" but instead modifying a small negative value to a positive value. As seen above, the negative passthrough clipping relies on clipping curves (for example of Figs. 12 or 13) defined using the three clipping values *R_low_clip_value*, *G_low_clip_value* and *B_low_clip_value* obtained using the offline process of Fig. 8.

The gamut clipping method of step 713 has been tested on color ramps and on different content having sub-black levels on which artefacts were appearing when using a basic clipping method. It appears that the gamut clipping method of step 713 is solving the artefacts issues and allows sub-black levels passthrough (i.e., preservation).

**Fig. 15** illustrates a comparison of an application of a basic clipping method (left part) and of the clipping method of step 713 (right part) to a red ramp (here represented in grey scale) with increasing luminance (from (R = 0 ; G = 0 ; B = 0) to (R = 1023 ; G = 0 ; B = 0) in the BT.709 color gamut) and sub-black initial part (from (R = -70,068 ; G = -70,068 ; B =-70,068) to (R = 0 ; G = 0 ; B = 0)). As can be seen, the banding artifacts are strongly attenuated, and the sub-black levels are preserved.

It should be noted that the various embodiments of a clipping method described above are also applicable to P3 contents into a BT2020 container. These embodiments are also applicable to other color management workflows such as the Academy Color Encoding System (ACES) that is characterized by other color spaces than BT.2020 or P3 or BT.709.

We described above a number of embodiments. Features of these embodiments can be provided alone or in any combination. Further, embodiments can include one or more of the following features, devices, or aspects, alone or in any combination, across various claim categories and types:
- A bitstream or signal that includes one or more of the described video content with converted color gamut using the proposed gamut clipping method, or variations thereof.
- Creating and/or transmitting and/or receiving and/or decoding a bitstream or signal that includes one or more of the described video content with converted color gamut using the proposed gamut clipping method, or variations thereof.
- A server, camera, TV, set-top box, cell phone, tablet, personal computer or other electronic device that performs at least one of the embodiments described.
- A TV, set-top box, cell phone, tablet, personal computer or other electronic device that performs at least one of the embodiments described, and that displays (e.g. using a monitor, screen, or other type of display) a resulting picture.
- A TV, set-top box, cell phone, tablet, personal computer or other electronic device that tunes (e.g. using a tuner) a channel to receive a signal including an encoded video content with converted color gamut, and performs at least one of the embodiments described.
- A TV, set-top box, cell phone, tablet, or other electronic device that receives (e.g. using an antenna) a signal over the air that includes a video content with converted color gamut, and performs at least one of the embodiments described.
- A server, camera, cell phone, tablet, personal computer or other electronic device that tunes (e.g. using a tuner) a channel to transmit a signal including a video content with converted color gamut, and performs at least one of the embodiments described.
- A server, camera, cell phone, tablet, personal computer or other electronic device that transmits (e.g. using an antenna) a signal over the air that includes a video content with converted color gamut, and performs at least one of the embodiments described.

## Claims

1. A method comprising:
obtaining (70) a first YUV picture in a first color gamut;
applying (71) a conversion process to the first YUV picture to obtain a second YUV picture in a second color gamut, the first color gamut encompassing the second color gamut, the conversion process comprising for a first YUV pixel of the first YUV picture:
obtaining (712) a first RGB pixel in the second color gamut obtained from the first YUV pixel;
obtaining (7131) a pre-conditioned first RGB pixel from the first RGB pixel by applying a pre-conditioning step, the pre-conditioning step comprising clipping to zero each component of the first RGB pixel lower than zero responsive to at least one component of the first RGB pixel being greater than zero; and,
applying (7132) a gamut clipping process to the pre-conditioned first RGB pixel, the gamut clipping process consisting in clipping at least one component of the pre-conditioned first RGB pixel to a value defined by a clipping curve responsive to the at least one component fulfils a clipping criterion based on the clipping curve.

2. The method of claim 1 wherein, the pre-conditioned first RGB pixel is equal to the first RGB pixel responsive to no component of the first RGB pixel is lower than zero.

3. The method of claim 1 or 2 wherein, responsive to at least one component of the first RGB pixel is lower than zero and a maximum of the components of the first RGB pixel is comprised between zero and a minimum value for clipping, each component of the first RGB pixel lower than zero is multiplied by a weighting value greater than zero and lower than one depending on the maximum to obtain a corresponding component of the pre-conditioned first RGB pixel.

4. The method of claim 3 wherein the weighting value MULT_VALUE is computed as follows: $MULT_VALUE = 1 - MAX / minForClip$ wherein MAX is the maximum and minForClip is the minimum value for clipping.

5. The method of claim 3 wherein the weighting value MULT_VALUE is computed as follows: $MULT_VALUE = 1 - \sqrt{\frac{MAX}{minForClip}}$ wherein MAX is the maximum and minForClip is the minimum value for clipping.

6. The method of any previous claim wherein, the clipping curve is such that a constant value is added to each negative component of the pre-conditioned first RGB pixel that is lower than a negative clipping constant.

7. The method of any previous claim from claim 1 to 5 wherein, the clipping curve is such that no modification is applied to each negative component of the pre-conditioned first RGB pixel that is lower than a first negative clipping constant and a function is applied to each negative component of the pre-conditioned first RGB pixel that is lower than a second clipping constant but greater than the first negative clipping constant.

8. The method of any previous claim wherein, the clipping curve is determined using a clipping curve determination process based on at least one second YUV pixel in the first color gamut with a value neighboring the value of the first YUV pixel and that provide a value of the component not fulfilling the clipping criterion when the second YUV pixel is converted in a second RGB pixel in the second color gamut.

9. A device comprising electronic circuitry configured for:
obtaining (70) a first YUV picture in a first color gamut;
applying (71) a conversion process to the first YUV picture to obtain a second YUV picture in a second color gamut, the first color gamut encompassing the second color gamut, the conversion process comprising for a first YUV pixel of the first YUV picture:
obtaining (712) a first RGB pixel in the second color gamut obtained from the first YUV pixel;
obtaining (7131) a pre-conditioned first RGB pixel from the first RGB pixel by applying a pre-conditioning step, the pre-conditioning step comprising clipping to zero each component of the first RGB pixel lower than zero responsive to at least one component of the first RGB pixel being greater than zero; and,
applying (7132) a gamut clipping process to the pre-conditioned first RGB pixel, the gamut clipping process consisting in clipping at least one component of the pre-conditioned first RGB pixel to a value defined by a clipping curve responsive to the at least one component fulfils a clipping criterion based on the clipping curve.

10. The device of claim 9 wherein, the pre-conditioned first RGB pixel is equal to the first RGB pixel responsive to no component of the first RGB pixel is lower than zero.

11. The device of claim 9 or 10 wherein, responsive to at least one component of the first RGB pixel is lower than zero and a maximum of the components of the first RGB pixel is comprised between zero and a minimum value for clipping, each component of the first RGB pixel lower than zero is multiplied by a weighting value greater than zero and lower than one depending on the maximum to obtain a corresponding component of the pre-conditioned first RGB pixel.

12. The device of claim 11 wherein the weighting value MULT_VALUE is computed as follows:$MULT_VALUE = 1 - MAX / minForClip$ wherein MAX is the maximum and minForClip is the minimum value for clipping.

13. The device of claim 11 wherein the weighting value MULT_VALUE is computed as follows: $MULT_VALUE = 1 - \sqrt{\frac{MAX}{minForClip}}$ wherein MAX is the maximum and minForClip is the minimum value for clipping.

14. The device of any previous claim from claim 9 to 13 wherein, the clipping curve is such that a value is added to each negative component of the pre-conditioned first RGB pixel that is lower than a negative clipping constant.

15. The device of any previous claim from claim 9 to 13 wherein, the clipping curve is such that no modification is applied to each negative component of the pre-conditioned first RGB pixel that is lower than a first negative clipping constant and a function is applied to each negative component of the pre-conditioned first RGB pixel that is lower than a second negative clipping constant but greater than the first negative clipping constant.
